# EUROPEAN PATENT APPLICATION

(11) **EP 4 561 157 A1**
(43) Date of publication of application: **28.05.2025**
(21) Application number: 23842363.6
(22) Date of filing: 19.07.2023
(51) Int. Cl.: H04W 24/08

(54) **COMMUNICATION METHOD AND APPARATUS**

(30) Priority: 21.07.2022 CN 202210860665
(71) Applicant: Huawei Technologies Co., Ltd., Shenzhen, Guangdong 518129 (CN)
(72) Inventor: CAO, Wei, Shenzhen, Guangdong 518129 (CN); LI, Fang, Shenzhen, Guangdong 518129 (CN); LIU, Fengwei, Shenzhen, Guangdong 518129 (CN); CHEN, Lei, Shenzhen, Guangdong 518129 (CN); YUAN, Shitong, Shenzhen, Guangdong 518129 (CN)
(74) Representative: Pfenning, Meinig & Partner mbB
(86) International application number: PCT/CN2023/108178
(87) International publication number: WO 2024/017301

(57) **Abstract**

Embodiments of this application provide a communication method and apparatus. The method includes: A terminal device receives a preset inference model from a network device. The terminal device receives a first reference signal from the network device, and measures the first reference signal to determine a measurement result of the first reference signal. The terminal device determines an estimated measurement result of a second reference signal based on the preset inference model and the measurement result of the first reference signal, determines a candidate reference signal set based on the estimated measurement result of the second reference signal, and measures a candidate reference signal in the candidate reference signal set to determine an actual measurement result of the candidate reference signal. According to embodiments of this application, signaling exchange overheads and a delay can be reduced, and energy consumption of the terminal device can be reduced.

## Description

This application claims priority to Chinese Patent Application No. 202210860665.4, filed with the China National Intellectual Property Administration on July 21, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

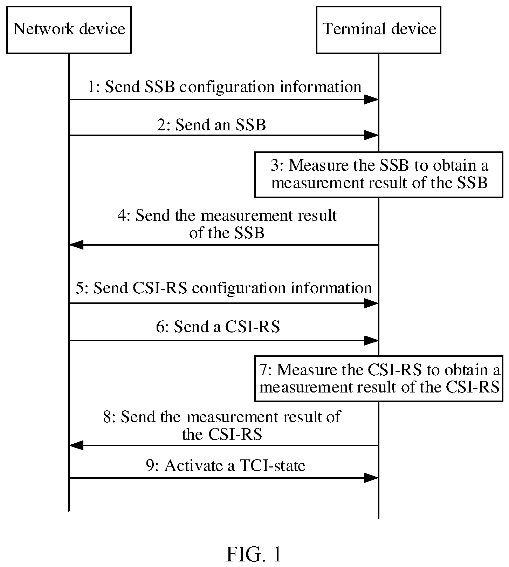

In a new wireless communication standard of a wireless communication system, beam management is to first perform coarse beam alignment based on a synchronization signal/physical broadcast channel block (synchronization signal and physical broadcasting channel block, SSB), and then perform fine beam adjustment based on a channel state information reference signal (channel state information reference signal, CSI-RS). A specific process is shown in FIG. 1. A network device sends SSB configuration information to a terminal device, the network device sends an SSB to the terminal device, the terminal device measures the SSB and feeds back a measurement result of the SSB to the network device, the network device sends CSI-RS configuration information to the terminal device based on the measurement result of the SSB, the network device sends a CSI-RS to the terminal device, the terminal device measures the CSI-RS and feeds back a measurement result of the CSI-RS to the network device, and the network device activates a corresponding transmission configuration indicator state (transmission configuration indicator state, TCI-state) based on the measurement result of the CSI-RS. However, the foregoing signaling exchange process is complex, and has a long delay. In addition, for beam measurement based on the SSB and the CSI-RS, with continuous evolution of large-array technologies on a high-frequency base station side, CSI-RS beams in a same SSB beam range are increasingly narrow, a quantity of beams is increasingly large, a measurement amount and corresponding energy consumption of a terminal are increasingly large, and a delay is increasingly long.

### SUMMARY

Embodiments of this application disclose a communication method and apparatus, to reduce signaling exchange overheads and a delay, and reduce energy consumption of a terminal device.

A first aspect of the embodiments of this application discloses a communication method. The method includes: A terminal device receives a preset inference model from a network device; the terminal device receives a first reference signal from the network device, and measures the first reference signal to determine a measurement result of the first reference signal, where the first reference signal includes a reference signal that belongs to a first set; the terminal device determines an estimated measurement result of a second reference signal based on the preset inference model and the measurement result of the first reference signal, where the second reference signal includes a reference signal that belongs to a second set; the terminal device determines a candidate reference signal set based on the estimated measurement result of the second reference signal, where the candidate reference signal set is the second set or a subset of the second set; and the terminal device measures a candidate reference signal in the candidate reference signal set to obtain an actual measurement result of the candidate reference signal.

In the foregoing method, the terminal device determines the estimated measurement result of the second reference signal based on the preset inference model and the measurement result of the first reference signal, and determines the candidate reference signal set based on the estimated measurement result of the second reference signal, to measure the candidate reference signal in the candidate reference signal set to obtain the actual measurement result, to be specific, measure a part or all of second reference signals sent by the network device. Compared with a current technology in which all of the second reference signals sent by the network device need to be measured, a measurement amount is reduced, thereby reducing energy consumption of the terminal device.

In a possible implementation, the method further includes: The terminal device receives port type information in the preset inference model and association relationship information from the network device, where the port type information in the preset inference model includes data type information of each input port and each output port in the preset inference model, and the association relationship information includes a relationship between the input port in the preset inference model and the first reference signal and a relationship between the output port in the preset inference model and the second reference signal. That the terminal device determines an estimated measurement result of a second reference signal based on the preset inference model and the measurement result of the first reference signal includes: The terminal device determines the estimated measurement result of the second reference signal based on the preset inference model, the measurement result of the first reference signal, the port type information in the preset inference model, and the association relationship information.

In still another possible implementation, each port in the preset inference model corresponds to one type of port type information, and port type information corresponding to a first port in the preset inference model is the same as port type information corresponding to a second port in the preset inference model. The first port may be an input port or an output port of the preset inference model, and the second port may be an input port or an output port of the preset inference model.

In still another possible implementation, each port in the preset inference model corresponds to one type of port type information, and port type information corresponding to a first port in the preset inference model is different from port type information corresponding to a second port in the preset inference model. The first port may be an input port or an output port of the preset inference model, and the second port may be an input port or an output port of the preset inference model.

In still another possible implementation, the port type information in the preset inference model includes one or more of the following: receive power information of a reference signal, received signal strength indication information of the reference signal, optimal quality probability information of the reference signal, received signal related information of the reference signal, an angle of departure AoD of the reference signal, an angle of arrival AoA of the reference signal, beam index information used for sending or receiving the reference signal, a beam weight used for sending or receiving the reference signal, location coordinate information of a terminal device when the reference signal is sent, posture and orientation information of the terminal device when the reference signal is sent, and identification information of the reference signal.

In still another possible implementation, that the terminal device determines the estimated measurement result of the second reference signal based on the preset inference model, the measurement result of the first reference signal, the port type information in the preset inference model, and the association relationship information includes: The terminal device inputs the measurement result of the first reference signal into the preset inference model based on the data type information of each input port in the port type information in the preset inference model and the relationship between the input port in the preset inference model and the first reference signal in the association relationship information; and the terminal device determines, based on the data type information of each output port in the port type information in the preset inference model and the relationship between the output port in the preset inference model and the second reference signal in the association relationship information, the estimated measurement result that is of the second reference signal and that is output from the preset inference model.

In still another possible implementation, the method further includes: The terminal device receives resource configuration information from the network device; and the terminal device sends the actual measurement result of the candidate reference signal to the network device based on the resource configuration information.

In still another possible implementation, the actual measurement result of the candidate reference signal includes one or more of the following: index information of a first candidate reference signal and reference signal received power RSRP of the first candidate reference signal; TCI-state activation recommendation information, where the TCI-state activation recommendation information includes an index of a transmission configuration indicator state TCI-state associated with the first candidate reference signal; or TCI-state update recommendation information, where the TCI-state update recommendation information includes the TCI-state index and the index information of the first candidate reference signal, where the first candidate reference signal includes one or more candidate reference signals in the candidate reference signal set. The index information of the first candidate reference signal can include a reference signal resource set index and a reference signal resource index in the set, or a reference signal resource index.

In still another possible implementation, the method further includes: The terminal device sends the measurement result of the first reference signal to the network device.

In still another possible implementation, the method further includes: The terminal device receives reporting type information from the network device, where the reporting type information includes a TCI-state activation recommendation and/or a TCI-state update recommendation.

In still another possible implementation, when the reporting type information includes the TCI-state activation recommendation, the actual measurement result of the candidate reference signal includes TCI-state activation recommendation information, and the TCI-state activation recommendation information includes the index of the TCI-state associated with the first candidate reference signal; or when the reporting type information includes the TCI-state update recommendation, the actual measurement result of the candidate reference signal includes the TCI-state update recommendation information, and the TCI-state update recommendation information includes the TCI-state index and the index information of the first candidate reference signal.

In the foregoing method, the network device configures the reporting type information for the terminal device, and correspondingly, the terminal device reports the actual measurement result of the candidate reference signal based on the reporting type information, so that signaling exchange can be simplified, thereby reducing signaling overheads and a delay.

In still another possible implementation, the method further includes: The terminal device receives first indication information from the network device when the actual measurement result of the candidate reference signal includes the TCI-state activation recommendation information, where the first indication information indicates whether the network device agrees to activate the TCI-state associated with the first candidate reference signal; or the terminal device receives second indication information from the network device when the actual measurement result of the candidate reference signal includes the TCI-state update recommendation information, where the second indication information indicates whether the network device agrees to update the TCI-state. The first indication information may be carried in downlink control information DCI, and the second indication information may also be carried in the DCI.

In the foregoing method, the network device sends the first indication information or the second indication information to the terminal device, so that the terminal device can be prevented from waiting for a long time, thereby reducing a delay.

In still another possible implementation, the method further includes: The terminal device receives a validity parameter of the preset inference model from the network device; and the terminal device determines, based on the validity parameter of the preset inference model, whether the preset inference model is valid.

In the foregoing method, the terminal device may determine, based on the validity parameter of the preset inference model, whether the preset inference model is valid, so that validity of the preset inference model can be detected in real time, and periodic traversal measurement is avoided, thereby reducing power consumption of the terminal device.

In still another possible implementation, the validity parameter of the preset inference model includes one or more of the following: a relative beam gain of the second reference signal to the first reference signal, a beam gain estimation error reference value of the second reference signal, a model invalidation count threshold, or a model invalidation count time window length.

In still another possible implementation, the validity parameter of the preset inference model includes a relative beam gain of the second reference signal to the first reference signal; and that the terminal device determines, based on the validity parameter of the preset inference model, whether the preset inference model is valid includes: The terminal device compares the actual measurement result of the candidate reference signal and the measurement result of the first reference signal with the relative beam gain of the second reference signal to the first reference signal to determine whether the preset inference model is valid.

In still another possible implementation, that the terminal device compares the actual measurement result of the candidate reference signal and the measurement result of the first reference signal with the relative beam gain of the second reference signal to the first reference signal to determine whether the preset inference model is valid includes: If a difference between a largest value in the actual measurement result of the candidate reference signal and a largest value in the measurement result of the first reference signal is greater than the relative beam gain of the second reference signal to the first reference signal, the terminal device determines that the preset inference model is valid; or if a difference between a largest value in the actual measurement result of the candidate reference signal and a largest value in the measurement result of the first reference signal is less than the relative beam gain of the second reference signal to the first reference signal, the terminal device determines that the preset inference model is invalid.

In still another possible implementation, the validity parameter of the preset inference model includes a beam gain estimation error reference value of the second reference signal; and that the terminal device determines, based on the validity parameter of the preset inference model, whether the preset inference model is valid includes: The terminal device compares the actual measurement result of the candidate reference signal and the estimated measurement result of the second reference signal with the beam gain estimation error reference value of the second reference signal to determine whether the preset inference model is valid.

In still another possible implementation, that the terminal device compares the actual measurement result of the candidate reference signal and the estimated measurement result of the second reference signal with the beam gain estimation error reference value of the second reference signal to determine whether the preset inference model is valid includes: If an absolute value of a difference between the actual measurement result of the candidate reference signal and the estimated measurement result of the second reference signal is less than the beam gain estimation error reference value of the second reference signal, the terminal device determines that the preset inference model is valid; or if an absolute value of a difference between the actual measurement result of the candidate reference signal and the estimated measurement result of the second reference signal is greater than or equal to the beam gain estimation error reference value of the second reference signal, the terminal device determines that the preset inference model is invalid.

In still another possible implementation, the validity parameter of the preset inference model includes a model invalidation count threshold; and that the terminal device determines, based on the validity parameter of the preset inference model, whether the preset inference model is valid includes: When the terminal device determines that a quantity of times the preset inference model is invalid is less than the model invalidation count threshold, the terminal device determines that the preset inference model is valid; or when the terminal device determines that a quantity of times the preset inference model is invalid is greater than or equal to the model invalidation count threshold, the terminal device determines that the preset inference model is invalid.

In still another possible implementation, the method further includes: The terminal device starts a counter; and increases a value of the counter when the terminal device determines that the preset inference model is invalid; and when the terminal device determines that the quantity of times the preset inference model is invalid is greater than or equal to the model invalidation count threshold, the terminal device performs a reset operation on the counter after the terminal device determines that the preset inference model is invalid.

In still another possible implementation, the validity parameter of the preset inference model includes the model invalidation count time window length; and the method further includes: The terminal device starts a timer, and the terminal device performs a reset operation on the counter when a value of the timer exceeds the model invalidation count time window length. It should be noted that the terminal device also performs a reset operation on the timer when the terminal device performs the reset operation on the counter.

In still another possible implementation, when the terminal device determines that the preset inference model is valid, the actual measurement result of the candidate reference signal further includes a validity identifier of the preset inference model; or when the terminal device determines that the preset inference model is invalid, the actual measurement result of the candidate reference signal further includes an invalidity identifier of the preset inference model.

A second aspect of the embodiments of this application discloses a communication method. The method includes: A terminal device receives a validity parameter of a preset inference model from a network device; and the terminal device determines, based on the validity parameter of the preset inference model, a measurement result of a first reference signal and/or an estimated measurement result of a second reference signal, and an actual measurement result of a candidate reference signal, whether the preset inference model is valid.

In the foregoing method, the terminal device may determine, based on the validity parameter of the preset inference model, whether the preset inference model is valid, so that validity of the preset inference model can be detected in real time, and periodic traversal measurement is avoided, thereby reducing power consumption of the terminal.

In still another possible implementation, the method further includes: The terminal device receives the preset inference model from the network device; the terminal device receives the first reference signal from the network device, and measures the first reference signal to determine the measurement result of the first reference signal, where the first reference signal includes a reference signal that belongs to a first set; the terminal device determines the estimated measurement result of the second reference signal based on the preset inference model and the measurement result of the first reference signal, where the second reference signal includes a reference signal that belongs to a second set; the terminal device determines a candidate reference signal set based on the estimated measurement result of the second reference signal, where the candidate reference signal set is the second set or a subset of the second set; and the terminal device measures the candidate reference signal in the candidate reference signal set to determine the actual measurement result of the candidate reference signal.

In still another possible implementation, the validity parameter of the preset inference model includes one or more of the following: a relative beam gain of the second reference signal to the first reference signal, a beam gain estimation error reference value of the second reference signal, a model invalidation count threshold, or a model invalidation count time length.

In still another possible implementation, the validity parameter of the preset inference model includes the relative beam gain of the second reference signal to the first reference signal; and that the terminal device determines, based on the validity parameter of the preset inference model, a measurement result of a first reference signal, and an actual measurement result of a candidate reference signal, whether the preset inference model is valid includes: The terminal device compares the actual measurement result of the candidate reference signal and the measurement result of the first reference signal with the relative beam gain of the second reference signal to the first reference signal to determine whether the preset inference model is valid.

In still another possible implementation, that the terminal device compares the actual measurement result of the candidate reference signal and the measurement result of the first reference signal with the relative beam gain of the second reference signal to the first reference signal to determine whether the preset inference model is valid includes: If a difference between a largest value in the actual measurement result of the candidate reference signal and a largest value in the measurement result of the first reference signal is greater than the relative beam gain of the second reference signal to the first reference signal, the terminal device determines that the preset inference model is valid; or if a difference between a largest value in the actual measurement result of the candidate reference signal and a largest value in the measurement result of the first reference signal is less than the relative beam gain of the second reference signal to the first reference signal, the terminal device determines that the preset inference model is invalid.

In still another possible implementation, the validity parameter of the preset inference model includes the beam gain estimation error reference value of the second reference signal; and that the terminal device determines, based on the validity parameter of the preset inference model, an estimated measurement result of a second reference signal, and an actual measurement result of a candidate reference signal, whether the preset inference model is valid includes: The terminal device compares the actual measurement result of the candidate reference signal and the estimated measurement result of the second reference signal with the beam gain estimation error reference value of the second reference signal to determine whether the preset inference model is valid.

In still another possible implementation, that the terminal device compares the actual measurement result of the candidate reference signal and the estimated measurement result of the second reference signal with the beam gain estimation error reference value of the second reference signal to determine whether the preset inference model is valid includes: If an absolute value of a difference between the actual measurement result of the candidate reference signal and the estimated measurement result of the second reference signal is less than the beam gain estimation error reference value of the second reference signal, the terminal device determines that the preset inference model is valid; or if an absolute value of a difference between the actual measurement result of the candidate reference signal and the estimated measurement result of the second reference signal is greater than or equal to the beam gain estimation error reference value of the second reference signal, the terminal device determines that the preset inference model is invalid.

In still another possible implementation, the validity parameter of the preset inference model includes the model invalidation count threshold; and that the terminal device determines, based on the validity parameter of the preset inference model, whether the preset inference model is valid includes: When the terminal device determines that a quantity of times the preset inference model is invalid is less than the model invalidation count threshold, the terminal device determines that the preset inference model is valid; or when the terminal device determines that a quantity of times the preset inference model is invalid is greater than or equal to the model invalidation count threshold, the terminal device determines that the preset inference model is invalid.

In still another possible implementation, the method further includes: The terminal device starts a counter; and increases a value of the counter when the terminal device determines that the preset inference model is invalid; and when the terminal device determines that the quantity of times the preset inference model is invalid is greater than or equal to the model invalidation count threshold, the terminal device performs a reset operation on the counter after the terminal device determines that the preset inference model is invalid.

In still another possible implementation, the validity parameter of the preset inference model includes the model invalidation count time window length; and the method further includes: The terminal device starts a timer, and the terminal device performs a reset operation on the counter when a value of the timer exceeds the time window length. It should be noted that the terminal device also performs a reset operation on the timer when the terminal device performs the reset operation on the counter.

In still another possible implementation, when the terminal device determines that the preset inference model is valid, the actual measurement result of the candidate reference signal further includes a validity identifier of the preset inference model; or when the terminal device determines that the preset inference model is invalid, the actual measurement result of the candidate reference signal further includes an invalidity identifier of the preset inference model.

In a possible implementation, the method further includes: The terminal device receives port type information in the preset inference model and association relationship information from the network device, where the port type information in the preset inference model includes data type information of each input port and each output port in the preset inference model, and the association relationship information includes a relationship between the input port in the preset inference model and the first reference signal and a relationship between the output port in the preset inference model and the second reference signal. That the terminal device determines an estimated measurement result of a second reference signal based on the preset inference model and the measurement result of the first reference signal includes: The terminal device determines the estimated measurement result of the second reference signal based on the preset inference model, the measurement result of the first reference signal, the port type information in the preset inference model, and the association relationship information.

In a possible implementation, each port in the preset inference model corresponds to one type of port type information, and port type information corresponding to a first port in the preset inference model is the same as port type information corresponding to a second port in the preset inference model. The first port may be an input port or an output port of the preset inference model, and the second port may be an input port or an output port of the preset inference model.

In a possible implementation, each port in the preset inference model corresponds to one type of port type information, and port type information corresponding to a first port in the preset inference model is different from port type information corresponding to a second port in the preset inference model. The first port may be an input port or an output port of the preset inference model, and the second port may be an input port or an output port of the preset inference model.

In still another possible implementation, the port type information in the preset inference model includes one or more of the following: receive power information of a reference signal, received signal strength indication information of the reference signal, optimal quality probability information of the reference signal, received signal related information of the reference signal, an angle of departure AoD of the reference signal, an angle of arrival AoA of the reference signal, beam index information used for sending or receiving the reference signal, a beam weight used for sending or receiving the reference signal, location coordinate information of a terminal device when the reference signal is sent, posture and orientation information of the terminal device when the reference signal is sent, and identification information of the reference signal.

In still another possible implementation, that the terminal device determines the estimated measurement result of the second reference signal based on the preset inference model, the measurement result of the first reference signal, the port type information in the preset inference model, and the association relationship information includes: The terminal device inputs the measurement result of the first reference signal into the preset inference model based on the data type information of each input port in the port type information in the preset inference model and the relationship between the input port in the preset inference model and the first reference signal in the association relationship information; and the terminal device determines, based on the data type information of each output port in the port type information in the preset inference model and the relationship between the output port in the preset inference model and the second reference signal in the association relationship information, the estimated measurement result that is of the second reference signal and that is output from the preset inference model.

In still another possible implementation, the method further includes: The terminal device receives resource configuration information from the network device; and the terminal device sends the actual measurement result of the candidate reference signal to the network device based on the resource configuration information.

In still another possible implementation, the actual measurement result of the candidate reference signal includes one or more of the following: index information of a first candidate reference signal and reference signal received power RSRP of the first candidate reference signal; TCI-state activation recommendation information, where the TCI-state activation recommendation information includes an index of a transmission configuration indicator state TCI-state associated with the first candidate reference signal; or TCI-state update recommendation information, where the TCI-state update recommendation information includes the TCI-state index and the index information of the first candidate reference signal, where the first candidate reference signal includes one or more candidate reference signals in the candidate reference signal set.

In still another possible implementation, the method further includes: The terminal device sends the measurement result of the first reference signal to the network device.

In still another possible implementation, the method further includes: The terminal device receives reporting type information from the network device, where the reporting type information includes a TCI-state activation recommendation and/or a TCI-state update recommendation.

In still another possible implementation, when the reporting type information includes the TCI-state activation recommendation, the actual measurement result of the candidate reference signal includes TCI-state activation recommendation information, and the TCI-state activation recommendation information includes the index of the TCI-state associated with the first candidate reference signal; or when the reporting type information includes the TCI-state update recommendation, the actual measurement result of the candidate reference signal includes the TCI-state update recommendation information, and the TCI-state update recommendation information includes the TCI-state index and the index information of the first candidate reference signal. The index information of the first candidate reference signal can include a reference signal resource set index and a reference signal resource index in the set, or a reference signal resource index.

In the foregoing method, the network device configures the reporting type information for the terminal device, and correspondingly, the terminal device reports the actual measurement result of the candidate reference signal based on the reporting type information, so that signaling exchange can be simplified, thereby reducing signaling overheads and a delay.

In still another possible implementation, the method further includes: The terminal device receives first indication information from the network device when the actual measurement result of the candidate reference signal includes the TCI-state activation recommendation information, where the first indication information indicates whether the network device agrees to activate the TCI-state associated with the first candidate reference signal; or the terminal device receives second indication information from the network device when the actual measurement result of the candidate reference signal includes the TCI-state update recommendation information, where the second indication information indicates whether the network device agrees to update the TCI-state.

In the foregoing method, the network device sends the first indication information or the second indication information to the terminal device, so that the terminal device can be prevented from waiting for a long time, thereby reducing a delay.

A third aspect of the embodiments of this application discloses a communication apparatus. The communication apparatus may be a terminal device or a chip in the terminal device, and includes a processing unit and a communication unit. The communication unit is configured to receive a preset inference model from a network device. The communication unit is configured to receive a first reference signal from the network device, and measure the first reference signal to determine a measurement result of the first reference signal, where the first reference signal includes a reference signal that belongs to a first set. The processing unit is configured to determine an estimated measurement result of a second reference signal based on the preset inference model and the measurement result of the first reference signal, where the second reference signal includes a reference signal that belongs to a second set. The processing unit is configured to determine a candidate reference signal set based on the estimated measurement result of the second reference signal, where the candidate reference signal set is the second set or a subset of the second set. The processing unit is configured to measure a candidate reference signal in the candidate reference signal set to determine an actual measurement result of the candidate reference signal.

In a possible implementation, the communication unit is further configured to receive port type information in the preset inference model and association relationship information from the network device, where the port type information in the preset inference model includes data type information of each input port and each output port in the preset inference model, and the association relationship information includes a relationship between the input port in the preset inference model and the first reference signal and a relationship between the output port in the preset inference model and the second reference signal; and the processing unit is further configured to determine the estimated measurement result of the second reference signal based on the preset inference model, the measurement result of the first reference signal, the port type information in the preset inference model, and the association relationship information.

In another possible implementation, each port in the preset inference model corresponds to one type of port type information, and port type information corresponding to a first port in the preset inference model is the same as port type information corresponding to a second port in the preset inference model. The first port may be an input port or an output port of the preset inference model, and the second port may be an input port or an output port of the preset inference model.

In still another possible implementation, each port in the preset inference model corresponds to one type of port type information, and port type information corresponding to a first port in the preset inference model is different from port type information corresponding to a second port in the preset inference model. The first port may be an input port or an output port of the preset inference model, and the second port may be an input port or an output port of the preset inference model.

In still another possible implementation, the port type information in the preset inference model includes one or more of the following: receive power information of a reference signal, received signal strength indication information of the reference signal, optimal quality probability information of the reference signal, received signal related information of the reference signal, an angle of departure AoD of the reference signal, an angle of arrival AoA of the reference signal, beam index information used for sending or receiving the reference signal, a beam weight used for sending or receiving the reference signal, location coordinate information of a terminal device when the reference signal is sent, posture and orientation information of the terminal device when the reference signal is sent, and identification information of the reference signal.

In still another possible implementation, the processing unit is configured to input the measurement result of the first reference signal into the preset inference model based on the data type information of each input port in the port type information in the preset inference model and the relationship between the input port in the preset inference model and the first reference signal in the association relationship information; and the processing unit is configured to determine, based on the data type information of each output port in the port type information in the preset inference model and the relationship between the output port in the preset inference model and the second reference signal in the association relationship information, the estimated measurement result that is of the second reference signal and that is output from the preset inference model.

In still another possible implementation, the communication unit is further configured to receive resource configuration information from the network device; and the communication unit is further configured to send the actual measurement result of the candidate reference signal to the network device based on the resource configuration information.

In still another possible implementation, the actual measurement result of the candidate reference signal includes one or more of the following: index information of a first candidate reference signal and reference signal received power RSRP of the first candidate reference signal; TCI-state activation recommendation information, where the TCI-state activation recommendation information includes an index of a transmission configuration indicator state TCI-state associated with the first candidate reference signal; or TCI-state update recommendation information, where the TCI-state update recommendation information includes the TCI-state index and the index information of the first candidate reference signal, where the first candidate reference signal includes one or more candidate reference signals in the candidate reference signal set.

In still another possible implementation, the communication unit is further configured to send the measurement result of the first reference signal to the network device.

In still another possible implementation, the communication unit is further configured to receive reporting type information from the network device, where the reporting type information includes a TCI-state activation recommendation and/or a TCI-state update recommendation.

In still another possible implementation, when the reporting type information includes the TCI-state activation recommendation, the actual measurement result of the candidate reference signal includes TCI-state activation recommendation information, and the TCI-state activation recommendation information includes the index of the TCI-state associated with the first candidate reference signal; or when the reporting type information includes the TCI-state update recommendation, the actual measurement result of the candidate reference signal includes the TCI-state update recommendation information, and the TCI-state update recommendation information includes the TCI-state index and the index information of the first candidate reference signal.

In still another possible implementation, the communication unit is further configured to receive first indication information from the network device when the actual measurement result of the candidate reference signal includes the TCI-state activation recommendation information, where the first indication information indicates whether the network device agrees to activate the TCI-state associated with the first candidate reference signal; or the communication unit is further configured to receive second indication information from the network device when the actual measurement result of the candidate reference signal includes the TCI-state update recommendation information, where the second indication information indicates whether the network device agrees to update the TCI-state.

In still another possible implementation, the communication unit is further configured to receive a validity parameter of the preset inference model from the network device; and the processing unit is further configured to determine, based on the validity parameter of the preset inference model, whether the preset inference model is valid.

In still another possible implementation, the validity parameter of the preset inference model includes one or more of the following: a relative beam gain of the second reference signal to the first reference signal, a beam gain estimation error reference value of the second reference signal, a model invalidation count threshold, or a model invalidation count time window length.

In still another possible implementation, the processing unit is configured to compare the actual measurement result of the candidate reference signal and the measurement result of the first reference signal with the relative beam gain of the second reference signal to the first reference signal to determine whether the preset inference model is valid.

In still another possible implementation, the processing unit is configured to: if a difference between a largest value in the actual measurement result of the candidate reference signal and a largest value in the measurement result of the first reference signal is greater than the relative beam gain of the second reference signal to the first reference signal, determine that the preset inference model is valid; or the processing unit is configured to: if a difference between a largest value in the actual measurement result of the candidate reference signal and a largest value in the measurement result of the first reference signal is less than the relative beam gain of the second reference signal to the first reference signal, determine that the preset inference model is invalid.

In still another possible implementation, the processing unit is configured to compare the actual measurement result of the candidate reference signal and the estimated measurement result of the second reference signal with the beam gain estimation error reference value of the second reference signal to determine whether the preset inference model is valid.

In still another possible implementation, the processing unit is configured to: if an absolute value of a difference between the actual measurement result of the candidate reference signal and the estimated measurement result of the second reference signal is less than the beam gain estimation error reference value of the second reference signal, determine that the preset inference model is valid; or the processing unit is configured to: if an absolute value of a difference between the actual measurement result of the candidate reference signal and the estimated measurement result of the second reference signal is greater than or equal to the beam gain estimation error reference value of the second reference signal, determine that the preset inference model is invalid.

In still another possible implementation, the processing unit is configured to: when determining that a quantity of times the preset inference model is invalid is less than the model invalidation count threshold, determine that the preset inference model is valid; or the processing unit is configured to: when determining that a quantity of times the preset inference model is invalid is greater than or equal to the model invalidation count threshold, determine that the preset inference model is invalid.

In still another possible implementation, the processing unit is further configured to start a counter; the processing unit is further configured to increase a value of the counter when determining that the preset inference model is invalid; and the processing unit is further configured to: when determining that the quantity of times the preset inference model is invalid is greater than or equal to the model invalidation count threshold, perform a reset operation on the counter after determining that the preset inference model is invalid.

In still another possible implementation, the validity parameter of the preset inference model includes the model invalidation count time window length; and the processing unit is further configured to start a timer, and perform a reset operation on the counter when a value of the timer exceeds the time window length. It should be noted that, the processing unit further performs a reset operation on the timer when performing the reset operation on the counter.

In still another possible implementation, when it is determined that the preset inference model is valid, the actual measurement result of the candidate reference signal further includes a validity identifier of the preset inference model; or when it is determined that the preset inference model is invalid, the actual measurement result of the candidate reference signal further includes an invalidity identifier of the preset inference model.

For technical effects brought by the third aspect or the possible implementations, refer to the descriptions of the technical effects of the first aspect or corresponding implementations.

A fourth aspect of the embodiments of this application discloses a communication apparatus. The communication apparatus may be a terminal device or a chip in the terminal device, and includes a processing unit and a communication unit. The communication unit is configured to receive a validity parameter of a preset inference model from a network device. The processing unit is further configured to determine, based on the validity parameter of the preset inference model, a measurement result of a first reference signal and/or an estimated measurement result of a second reference signal, and an actual measurement result of a candidate reference signal, whether the preset inference model is valid.

In still another possible implementation, the communication unit is further configured to receive the preset inference model from the network device; the communication unit is further configured to receive the first reference signal from the network device, and measure the first reference signal to determine the measurement result of the first reference signal, where the first reference signal includes a reference signal that belongs to a first set; the processing unit is further configured to determine the estimated measurement result of the second reference signal based on the preset inference model and the measurement result of the first reference signal, where the second reference signal includes a reference signal that belongs to a second set; the processing unit is further configured to determine a candidate reference signal set based on the estimated measurement result of the second reference signal, where the candidate reference signal set is the second set or a subset of the second set; and the processing unit is further configured to measure the candidate reference signal in the candidate reference signal set to determine the actual measurement result of the candidate reference signal.

In another possible implementation, the validity parameter of the preset inference model includes one or more of the following: a relative beam gain of the second reference signal to the first reference signal, a beam gain estimation error reference value of the second reference signal, a model invalidation count threshold, or a model invalidation count time length.

In still another possible implementation, the validity parameter of the preset inference model includes the relative beam gain of the second reference signal to the first reference signal; and the processing unit is configured to compare the actual measurement result of the candidate reference signal and the measurement result of the first reference signal with the relative beam gain of the second reference signal to the first reference signal to determine whether the preset inference model is valid.

In still another possible implementation, the processing unit is configured to: if a difference between a largest value in the actual measurement result of the candidate reference signal and a largest value in the measurement result of the first reference signal is greater than the relative beam gain of the second reference signal to the first reference signal, determine that the preset inference model is valid; or the processing unit is configured to: if a difference between a largest value in the actual measurement result of the candidate reference signal and a largest value in the measurement result of the first reference signal is less than the relative beam gain of the second reference signal to the first reference signal, determine that the preset inference model is invalid.

In still another possible implementation, the validity parameter of the preset inference model includes the beam gain estimation error reference value of the second reference signal; and the processing unit is configured to compare the actual measurement result of the candidate reference signal and the estimated measurement result of the second reference signal with the beam gain estimation error reference value of the second reference signal to determine whether the preset inference model is valid.

In still another possible implementation, the processing unit is configured to: if an absolute value of a difference between the actual measurement result of the candidate reference signal and the estimated measurement result of the second reference signal is less than the beam gain estimation error reference value of the second reference signal, determine that the preset inference model is valid; or the processing unit is configured to: if an absolute value of a difference between the actual measurement result of the candidate reference signal and the estimated measurement result of the second reference signal is greater than or equal to the beam gain estimation error reference value of the second reference signal, determine that the preset inference model is invalid.

In still another possible implementation, the validity parameter of the preset inference model includes the model invalidation count threshold; and the processing unit is configured to: when determining that a quantity of times the preset inference model is invalid is less than the model invalidation count threshold, determine that the preset inference model is valid; or the processing unit is configured to: when determining that a quantity of times the preset inference model is invalid is greater than or equal to the model invalidation count threshold, determine that the preset inference model is invalid.

In still another possible implementation, the processing unit is further configured to start a counter; and increase a value of the counter when determining that the preset inference model is invalid; and the processing unit is further configured to: when determining that the quantity of times the preset inference model is invalid is greater than or equal to the model invalidation count threshold, perform a reset operation on the counter after determining that the preset inference model is invalid.

In still another possible implementation, the validity parameter of the preset inference model includes the model invalidation count time window length; and the processing unit is further configured to start a timer, and perform a reset operation on the counter when a value of the timer exceeds the time window length. It should be noted that, the processing unit further performs a reset operation on the timer when performing the reset operation on the counter.

In still another possible implementation, when it is determined that the preset inference model is valid, the actual measurement result of the candidate reference signal further includes a validity identifier of the preset inference model; or when it is determined that the preset inference model is invalid, the actual measurement result of the candidate reference signal further includes an invalidity identifier of the preset inference model.

In still another possible implementation, the communication unit is further configured to receive port type information in the preset inference model and association relationship information from the network device, where the port type information in the preset inference model includes data type information of each input port and each output port in the preset inference model, and the association relationship information includes a relationship between the input port in the preset inference model and the first reference signal and a relationship between the output port in the preset inference model and the second reference signal; and the processing unit is configured to determine the estimated measurement result of the second reference signal based on the preset inference model, the measurement result of the first reference signal, the port type information in the preset inference model, and the association relationship information.

In another possible implementation, each port in the preset inference model corresponds to one type of port type information, and port type information corresponding to a first port in the preset inference model is the same as port type information corresponding to a second port in the preset inference model. The first port may be an input port or an output port of the preset inference model, and the second port may be an input port or an output port of the preset inference model.

In still another possible implementation, each port in the preset inference model corresponds to one type of port type information, and port type information corresponding to a first port in the preset inference model is different from port type information corresponding to a second port in the preset inference model. The first port may be an input port or an output port of the preset inference model, and the second port may be an input port or an output port of the preset inference model.

In still another possible implementation, the port type information in the preset inference model includes one or more of the following: receive power information of a reference signal, received signal strength indication information of the reference signal, optimal quality probability information of the reference signal, received signal related information of the reference signal, an angle of departure AoD of the reference signal, an angle of arrival AoA of the reference signal, beam index information used for sending or receiving the reference signal, a beam weight used for sending or receiving the reference signal, location coordinate information of a terminal device when the reference signal is sent, posture and orientation information of the terminal device when the reference signal is sent, and identification information of the reference signal.

In still another possible implementation, the processing unit is configured to input the measurement result of the first reference signal into the preset inference model based on the data type information of each input port in the port type information in the preset inference model and the relationship between the input port in the preset inference model and the first reference signal in the association relationship information; and the processing unit is configured to determine, based on the data type information of each output port in the port type information in the preset inference model and the relationship between the output port in the preset inference model and the second reference signal in the association relationship information, the estimated measurement result that is of the second reference signal and that is output from the preset inference model.

In still another possible implementation, the communication unit is further configured to receive resource configuration information from the network device; and the communication unit is further configured to send the actual measurement result of the candidate reference signal to the network device based on the resource configuration information.

In still another possible implementation, the actual measurement result of the candidate reference signal includes one or more of the following: index information of a first candidate reference signal and reference signal received power RSRP of the first candidate reference signal; TCI-state activation recommendation information, where the TCI-state activation recommendation information includes an index of a transmission configuration indicator state TCI-state associated with the first candidate reference signal; or TCI-state update recommendation information, where the TCI-state update recommendation information includes the TCI-state index and the index information of the first candidate reference signal, where the first candidate reference signal includes one or more candidate reference signals in the candidate reference signal set.

In still another possible implementation, the communication unit is further configured to send the measurement result of the first reference signal to the network device.

In still another possible implementation, the communication unit is further configured to receive reporting type information from the network device, where the reporting type information includes a TCI-state activation recommendation and/or a TCI-state update recommendation.

In still another possible implementation, when the reporting type information includes the TCI-state activation recommendation, the actual measurement result of the candidate reference signal includes TCI-state activation recommendation information, and the TCI-state activation recommendation information includes the index of the TCI-state associated with the first candidate reference signal; or when the reporting type information includes the TCI-state update recommendation, the actual measurement result of the candidate reference signal includes the TCI-state update recommendation information, and the TCI-state update recommendation information includes the TCI-state index and the index information of the first candidate reference signal.

In still another possible implementation, the communication unit is further configured to receive first indication information from the network device when the actual measurement result of the candidate reference signal includes the TCI-state activation recommendation information, where the first indication information indicates whether the network device agrees to activate the TCI-state associated with the first candidate reference signal; or the communication unit is further configured to receive second indication information from the network device when the actual measurement result of the candidate reference signal includes the TCI-state update recommendation information, where the second indication information indicates whether the network device agrees to update the TCI-state.

For technical effects brought by the fourth aspect or the possible implementations, refer to the descriptions of the technical effects of the second aspect or corresponding implementations.

A fifth aspect of the embodiments of this application discloses a communication apparatus. The communication apparatus may be a terminal device or a chip in the terminal device. The communication apparatus includes at least one processor and a communication interface. The at least one processor invokes a computer program or instructions stored in a memory to perform any one of the first aspect or the possible implementations of the first aspect.

A sixth aspect of the embodiments of this application discloses a communication apparatus. The communication apparatus may be a terminal device or a chip in the terminal device. The communication apparatus includes at least one processor and a communication interface. The at least one processor invokes a computer program or instructions stored in a memory to perform any one of the first aspect or the possible implementations of the first aspect.

A seventh aspect of the embodiments of this application discloses a chip system. The chip system includes at least one processor and a communication interface. The at least one processor is configured to execute a computer program or instructions, to implement the method according to any one of the foregoing aspects.

An eighth aspect of the embodiments of this application discloses a computer-readable storage medium. The computer-readable storage medium stores computer instructions. When the computer instructions run on a processor, the method according to any one of the foregoing aspects is implemented.

A ninth aspect of the embodiments of this application discloses a computer program product. The computer program product includes computer program code. When the computer program code runs on a computer, the method according to any one of the foregoing aspects is implemented.

### BRIEF DESCRIPTION OF DRAWINGS

The following describes accompanying drawings used in embodiments of this application.
FIG. 1 is a schematic flowchart of a beam management process according to an embodiment of this application;
FIG. 2 is a diagram of a structure of a communication system 100 according to an embodiment of this application;
FIG. 3 is a diagram of a beam management process according to an embodiment of this application;
FIG. 4 is a schematic flowchart of a coarse beam alignment method according to an embodiment of this application;
FIG. 5 is a schematic flowchart of a fine beam adjustment process of a network device according to an embodiment of this application;
FIG. 6 is a schematic flowchart of a communication method according to an embodiment of this application;
FIG. 7 is a diagram of association relationship information and port type information in a preset inference model according to an embodiment of this application;
FIG. 8 is a schematic flowchart of another communication method according to an embodiment of this application;
FIG. 9 is a schematic flowchart of still another communication method according to an embodiment of this application;
FIG. 10 is a schematic flowchart of yet another communication method according to an embodiment of this application;
FIG. 11 is a schematic flowchart of still yet another communication method according to an embodiment of this application;
FIG. 12 is a diagram of a structure of a communication apparatus according to an embodiment of this application; and
FIG. 13 is a diagram of a structure of a communication apparatus according to an embodiment of this application.

### DESCRIPTION OF EMBODIMENTS

The following describes the embodiments of this application with reference to the accompanying drawings in the embodiments of this application.

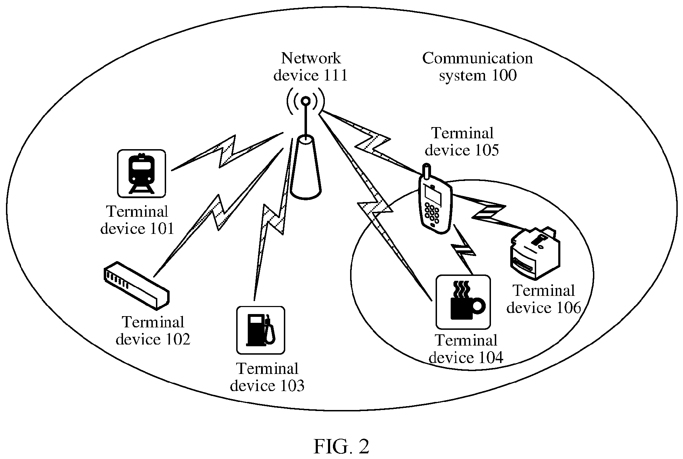

FIG. 2 is a diagram of a structure of a communication system 100 according to an embodiment of this application. The communication system 100 includes a network device 111, a terminal device 101, a terminal device 102, a terminal device 103, a terminal device 104, a terminal device 105, and a terminal device 106. It should be understood that the communication system 100 may include more network devices or more or fewer terminal devices. The network device and the terminal device may be hardware, may be software obtained through functional division, or may be a combination thereof. The network device and the terminal device may communicate with each other through another device or network element. In this system, the network device 111 may transmit data with a plurality of terminal devices. In other words, the network device 111 sends downlink data to the terminal device 101 to the terminal device 106. Certainly, the terminal device 101 to the terminal device 106 may also send uplink data to the network device 111. In addition, the terminal device 104, the terminal device 105, and the terminal device 106 may alternatively constitute a communication system. In this system, the network device 111 may send downlink data to the terminal device 101, the terminal device 102, and the terminal device 105. Then, the terminal device 105 sends the downlink data to the terminal device 104 or the terminal device 106. The method in the embodiments of this application may be applied to the communication system 100 shown in FIG. 2.
(1) A terminal device includes a device that provides a voice and/or data connectivity for a user, and specifically includes a device that provides a voice for the user, includes a device that provides data connectivity for the user, or includes a device that provides a voice and data connectivity for the user. For example, the terminal device may include a handheld device having a wireless connection function or a processing device connected to a wireless modem. The terminal device may communicate with a core network through a radio access network (radio access network, RAN), and exchange a voice or data with the RAN, or exchange a voice and data with the RAN. The terminal device may include user equipment (user equipment, UE), a wireless terminal device, a mobile terminal device, a device-to-device communication (device-to-device, D2D) terminal device, a vehicle-to-everything (vehicle-to-everything, V2X) terminal device, a machine-to-machine/machine type communication (machine-to-machine/machine type communication, M2M/MTC) terminal device, an internet of things (internet of things, IoT) terminal device, light user equipment (light UE), reduced capability user equipment (reduced capability UE, REDCAP UE), a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (also referred to as a "cellular" phone), a computer having a mobile terminal device, or a portable, pocket-sized, handheld, or computer-embedded mobile apparatus. For example, the terminal device may be a device, for example, a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal device may further include a limited device, for example, a device with relatively low power consumption, a device with a limited storage capability, or a device with a limited computing capability. For example, the terminal device includes an information sensing device, for example, a barcode, radio frequency identification (radio frequency identification, RFID), a sensor, a global positioning system (global positioning system, GPS), or a laser scanner.

By way of example rather than limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that are dedicated to only one type of application function and need to collaboratively work with other devices such as smartphones, for example, various smart bands, smart helmets, or smart jewelry for monitoring physical signs.

If the various terminal devices described above are located in a vehicle (for example, placed in the vehicle or installed in the vehicle), the terminal devices may each be considered as a vehicle-mounted terminal device. For example, the vehicle-mounted terminal device is also referred to as an on-board unit (on-board unit, OBU).

In embodiments of this application, the terminal device may further include a relay (relay). Alternatively, it is understood as that any entity that can perform data communication with a base station may be considered as the terminal device.

In embodiments of this application, an apparatus configured to implement a function of the terminal device may be a terminal device, or may be an apparatus that can support the terminal device in implementing the function, for example, a chip system. The apparatus may be installed in the terminal device. In embodiments of this application, the chip system may include a chip, or may include a chip and another discrete component. In the technical solutions provided in embodiments of this application, the technical solutions provided in embodiments of this application are described by using an example in which the apparatus configured to implement the function of the terminal is the terminal device.

(2) A network device includes, for example, an access network (access network, AN) device such as a base station (for example, an access point), and may be a device that communicates with a wireless terminal device through an air interface in one or more cells in an access network. Alternatively, the network device is, for example, a road side unit (road side unit, RSU) in a vehicle-to-everything (vehicle-to-everything, V2X) technology. The base station may be configured to perform mutual conversion between a received over-the-air frame and an IP packet, to serve as a router between the terminal device and a remaining part of the access network. The remaining part of the access network may include an IP network. The RSU may be a fixed infrastructure entity supporting a V2X application, and may exchange a message with another entity supporting the V2X application. The network device may further coordinate attribute management of the air interface. For example, the network device may include an evolved NodeB (NodeB, eNB, or e-NodeB, evolved NodeB) in a long term evolution (long term evolution, LTE) system or a long term evolution-advanced (long term evolution-advanced, LTE-A) system, may include a next generation NodeB (next generation NodeB, gNB) in a 5th generation (5th generation, 5G) mobile communication technology NR system (also briefly referred to as an NR system), or may include a central unit (central unit, CU) and a distributed unit (distributed unit, DU) in a cloud radio access network (cloud radio access network, Cloud RAN) system. This is not limited in embodiments of this application.

The network device may further include a core network device. The core network device includes, for example, an access and mobility management function (access and mobility management function, AMF), a user plane function (user plane function, UPF), or a session management function (session management function, SMF).

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, the technical solutions provided in embodiments of this application are described by an example in which the apparatus configured to implement the function of the network device is the network device.

Some terms in this application are first described, to help persons skilled in the art have a better understanding.
I. Beam: The beam is a communication resource. The beam may be a wide beam, a narrow beam, or another type of beam. A technology for forming the beam may be a beamforming technology or another technical means. The beamforming technology may be specifically a digital beamforming technology, an analog beamforming technology, or a hybrid digital/analog beamforming technology. Different beams may be considered as different resources. Same information or different information may be sent by different beams. Optionally, a plurality of beams having a same or similar communication feature may be considered as one beam. One beam may include one or more antenna ports, configured to transmit a data channel, a control channel, a sounding signal, and the like. For example, a transmit beam may be distribution of signal strength formed in different directions in space after a signal is transmitted through an antenna, and a receive beam may be distribution of signal strength, in different directions in space, of a radio signal received from an antenna. It may be understood that one or more antenna ports forming one beam may also be considered as one antenna port set. When a low frequency band or an intermediate frequency band is used, a signal may be sent omnidirectionally or at a relatively wide angle. When a high frequency band is used, because of a relatively small carrier wavelength of a high-frequency communication system, an antenna array formed by a plurality of antenna elements may be disposed at a transmitting end and a receiving end. The transmitting end sends a signal by a specific beamforming weight, to enable the sent signal to form a spatially directional beam, and the receiving end receives the signal through the antenna array by using a specific beamforming weight, so that receive power of the signal at the receiving end can be increased, and path loss can be avoided.
II. Quasi-co-location (quasi-co-location, QCL): A co-location relationship indicates that a plurality of resources have one or more same or similar communication features. A same or similar communication configuration may be used for the plurality of resources having the co-location relationship. For example, if two antenna ports have the co-location relationship, a large-scale channel property in which one port transmits one symbol may be inferred from a large-scale channel property in which the other port transmits one symbol. The large-scale property may include delay spread, an average delay, Doppler spread, a Doppler frequency shift, an average gain, a receive parameter, a receive beam number of a terminal device, transmit/receive channel correlation, an angle of arrival, spatial correlation of a receiver antenna, a dominant angle of arrival (Angle of Arrival, AoA), an average angle of arrival, AoA spread, and the like. Co-location indication information may indicate whether at least two groups of antenna ports have a co-location relationship, that is, the co-location indication information indicates whether channel state information reference signals sent by the at least two groups of antenna ports are from a same transmission point, or the co-location indication information indicates whether channel state information reference signals sent by the at least two groups of antenna ports are from a same beam group.
**III.** Reference signal (reference signal, RS): At a physical layer, uplink communication includes transmission of a physical uplink channel and an uplink signal. The physical uplink channel includes a random access channel (random access channel, PRACH), an uplink control channel (physical uplink control channel, PUCCH), an uplink data channel (physical uplink shared channel, PUSCH), and the like. The uplink signal includes a channel sounding signal (sounding reference signal, SRS), a PUCCH demodulation reference signal (PUCCH demodulation reference signal, PUCCH-DMRS), a PUSCH demodulation reference signal (PUSCH demodulation reference signal, PUSCH-DMRS), an uplink phase noise tracking signal (phase noise tracking reference signal, PTRS), and an uplink positioning signal (uplink positioning RS), and the like. Downlink communication includes transmission of a physical downlink channel and a downlink signal. The physical downlink channel includes a broadcast channel (physical broadcast channel, PBCH), a downlink control channel (physical downlink control channel, PDCCH), a downlink data channel (physical downlink shared channel, PDSCH), and the like. The downlink signal includes a primary synchronization signal (primary synchronization signal, PSS)/secondary synchronization signal (secondary synchronization signal, SSS), a downlink control channel demodulation reference signal (PDCCH demodulation reference signal, PDCCH-DMRS), a downlink data channel demodulation reference signal (PDSCH demodulation reference signal, PDSCH-DMRS), a phase noise tracking signal PTRS, a channel state information reference signal (channel status information reference signal, CSI-RS), a cell signal (cell reference signal, CRS), a fine synchronization signal (time/frequency tracking reference signal, TRS), a positioning signal (positioning RS), and the like.
IV. Beam management process: During beam management, coarse beam alignment is first performed based on an SSB and then fine beam adjustment is performed based on a CSI-RS. A specific process may be divided into three phases.

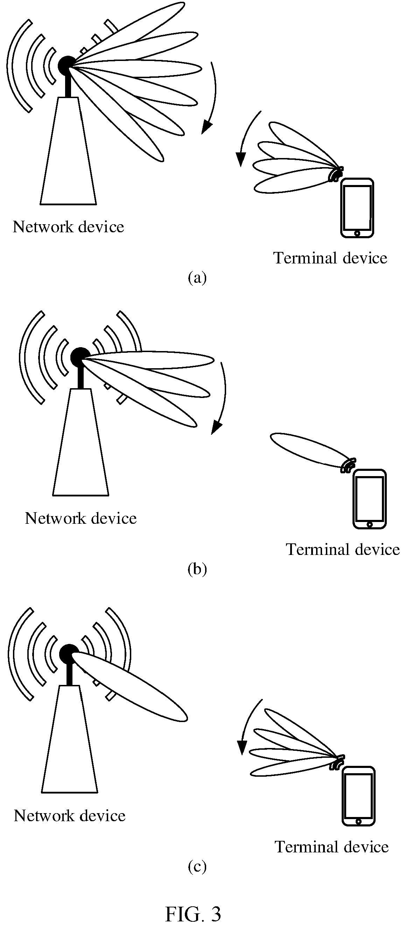

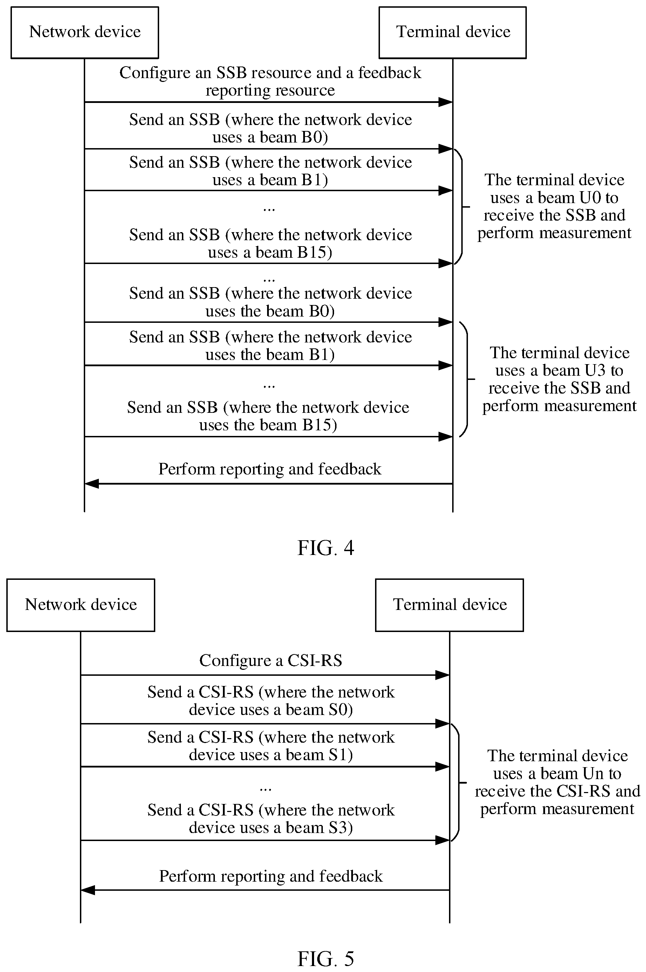

Phase 1: Beams of a network device and a terminal device are coarsely aligned, as shown in (a) in FIG. 3. The network device performs beam scanning based on the SSB. To be specific, the network device sends beams in different directions at different moments, to complete broadcast beam coverage of a cell. At the same time, the terminal device scans receive beams, to be specific, the terminal device also performs receiving by using different beams at different moments. The terminal device determines base station beams and terminal device beams based on received signal strength. For example, specifically, it is assumed that a radio resource control (radio resource control, RRC) connection is already established between the terminal device and the network device, the network device beams include B = {*B*₀*, B*₁*, ..., B*_{*M-*1}}*,* and the terminal beams include 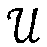 = {*U*₀*, U*₁*, ..., U*_{*N-*1}}*.* A procedure of a coarse beam alignment process is shown in FIG. 4, where M = 16 and *N =* 4. First, the network device configures an SSB resource and a feedback reporting resource through RRC signaling. The SSB resource is configured by the network device by using an information element (information element, IE) channel state information resource configuration (CSI-ResourceConfig) in the RRC signaling. Each configuration may include one channel state information synchronization/broadcast signal block resource set (CSI-SSB-ResourceSet), and each set may include a maximum of 64 SSB resources. However, the feedback reporting resource is configured by the network device by using an information element channel state information report configuration (CSI-ReportConfig) in the RRC signaling, and configuration content includes a time-frequency domain resource for reporting and feedback, reported content, and the like. Then, the network device sends the SSB. The network device sends the SSB based on a resource location configured in the previously configured SSB resource, and sequentially scans the network device beams. Specifically, for an *i*^{th} (*i* = 0,1, ...) SSB, the network device uses a beam *Bₘ,* and the terminal device uses a beam *Uₙ*, where *nM + m* = mod(i, *MN*)*,* m is greater than or equal to 0 and less than M, and n is greater than or equal to 0 and less than N, for example, *M* = 16 and *N* = 4. Finally, the terminal device feeds back beam information of the network device to the network device.

Phase 2: The network device finely adjusts a beam, as shown in (b) in FIG. 3. The network device determines a candidate beam based on the network device beams obtained in Phase 1, and performs scanning by using a CSI-RS, and the terminal device performs receiving by using the receive beam selected in Phase 1, to finely adjust the network device beams. Specifically, it is assumed that a terminal beam selected by the terminal device in Phase 1 is *Uₙ*; and the candidate beam determined by the network device based on the network device beams determined in Phase 1 includes *S* = {*S*₀, *S*₁*,* ... , *S*_{*K-*1}} (where *K* is usually less than M, and S may be a subset of B). A procedure is shown in FIG. 5 (for example, S = 4 in FIG. 5). First, the network device configures a CSI-RS resource and a feedback reporting resource. The CSI-RS resource is configured by the network device by using an information element (information element, IE) channel state information resource configuration (CSI-ResourceConfig) in RRC signaling, and may include S non-zero channel state information reference signal resource sets (NZP-CSI-RS-ResourceSet) (for periodic and semi-static CSI-RSs, S = 1), where each NZP-CSI-RS-ResourceSet may be associated with one or more non-zero channel state information reference signal resources (NZP-CSI-RS-Resource). The CSI-RS resource may be periodic, semi-static, or aperiodic. A periodic CSI-RS does not need to be activated/triggered, but a semi-static CSI-RS and an aperiodic CSI-RS are respectively activated/triggered by using a media access control NAP element (media access control-control element, MAC CE)/downlink control information (downlink control information, DCI) and DCI. The feedback reporting resource is configured by the network device by using an information element CSI-ReportConfig in the RRC signaling, and may be a periodic or semi-static PUCCH resource, or may be a semi-static or aperiodic PUSCH resource. Similarly, periodic CSI feedback does not need to be triggered, but semi-static feedback and aperiodic feedback are respectively activated/triggered by using MAC-CE/DCI and DCI. The CSI-ReportConfig is associated with one CSI-ResourceConfig. For different types of CSI-ResourceConfigs, types supported by CSI-ReportConfigs associated with the CSI-ResourceConfigs are also different. As shown in Table 1, the network device sequentially sends CSI-RSs, and on an *i*^{th} (i = 0,1, *.., K* - 1) CSI-RS, the network device uses a beam *Sᵢ*, and the terminal device uses a beam *Uₙ*. The terminal device reports and feeds back a measurement result based on the feedback reporting resource.

**Table 1**

| CSI-RS configuration | Periodic CSI feedback | Semi-static CSI feedback | Aperiodic CSI feedback |
|---|---|---|---|
| Periodic CSI-RS | Supportable | Supportable | Supportable |
| Semi-static CSI-RS | Non-supportable | Supportable | Supportable |
| Aperiodic CSI-RS | Non-supportable | Non-supportable | Supportable |

Phase 3: The terminal device finely adjusts a beam, as shown in (c) in FIG. 3. The network device fixedly sends a CSI-RS by using the beam obtained in Phase 2, and the terminal device scans the beam, to determine the terminal device beam, and complete beam alignment. The process is similar to that in Phase 2, and details are not described.

As shown in FIG. 1, a network device sends SSB configuration information to a terminal device. Correspondingly, the terminal device receives the SSB configuration information of the network device. The network device sends an SSB to the terminal device. Correspondingly, the terminal device receives the SSB from the network device, and then the terminal device measures the SSB and feeds back a measurement result of the SSB to the network device. Then, the network device sends CSI-RS configuration information to the terminal device based on the measurement result of the SSB. The network device sends a CSI-RS to the terminal device. Correspondingly, the terminal device receives the CSI-RS from the network device. The terminal device measures the CSI-RS and feeds back a measurement result of the CSI-RS to the network device. The network device activates a corresponding transmission configuration indicator state (transmission configuration indicator state, TCI-state) based on the measurement result of the CSI-RS. However, the foregoing signaling exchange process is complex, and a delay is long. In addition, for beam measurement based on the SSB and the CSI-RS, with continuous evolution of a large array technology on a high frequency base station side, CSI-RS beams in a same SSB beam range become increasingly narrow, and a quantity of beams increases. A measurement amount and corresponding energy consumption of a terminal are increasingly large, and a delay is also increasingly long. To resolve the foregoing problems, embodiments of this application provide the following solutions.

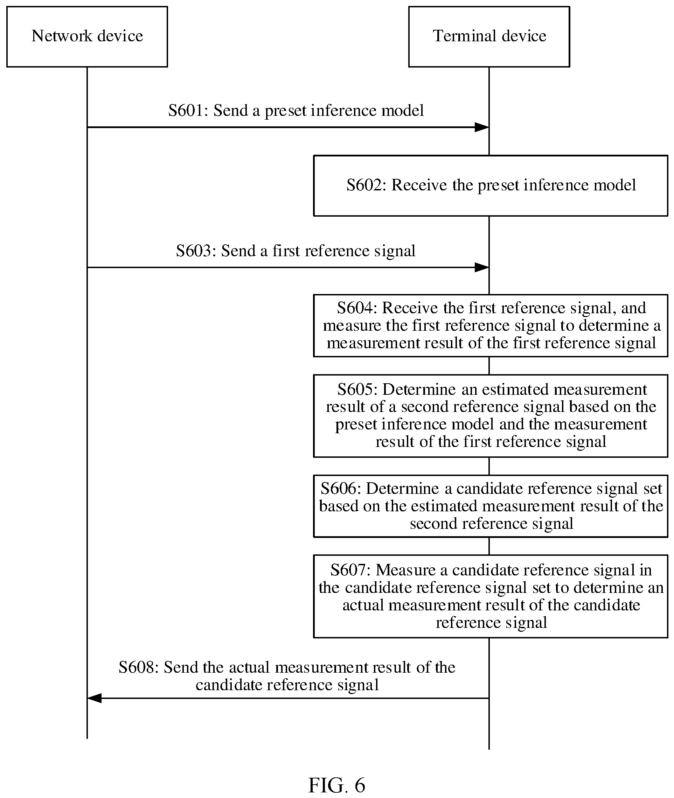

FIG. 6 shows a communication method according to an embodiment of this application. The method includes but is not limited to the following steps.

Step S601: A network device sends a preset inference model to a terminal device.

Specifically, the network device may send the inference model in a broadcast manner by using a system message, or may send the inference model to the terminal device in a unicast manner. Specifically, the network device may send a preset inference model of a corresponding scale based on a reporting capability of the terminal device (for example, a network scale supported by the terminal device). Using the broadcast manner can reduce overheads.

Step S602: The terminal device receives the preset inference model from the network device.

Specifically, the preset inference model may alternatively be predefined in a protocol. The preset inference model may be a neural network model, for example, a deep neural network (deep neural network, DNN) model, a convolutional neural network (convolutional neural network, CNN) model, or a recurrent neural network (recurrent neural network, RNN) model. This is not limited in this embodiment of this application.

Step S603: The network device sends a first reference signal to the terminal device.

Step S604: The terminal device receives the first reference signal from the network device, and measures the first reference signal to determine a measurement result of the first reference signal.

Specifically, the first reference signal includes a reference signal that belongs to a first set. The first reference signal may be an SSB, a CSI-RS, a PTRS, or the like. This is not limited in this embodiment of this application. For example, the first reference signal is a SSB whose sequence number is from 0 to 15, namely, an SSB 0, an SSB 1, an SSB 2, ..., an SSB 13, an SSB 14, or an SSB 15. The measurement result of the first reference signal may be one or more of the following: reference signal received power (reference signal received power, RSRP), a received signal strength indicator (received signal strength indicator, RSRI), reference signal received quality (reference signal received quality, RSRQ), a signal to noise ratio (signal to noise ratio, SNR), and a signal to interference plus noise ratio (signal to interference plus noise ratio, SINR).

Optionally, the terminal device may send the measurement result of the first reference signal to the network device.

Step S605: The terminal device determines an estimated measurement result of a second reference signal based on the preset inference model and the measurement result of the first reference signal.

Specifically, the second reference signal includes a reference signal that belongs to a second set. For example, the second reference signal may be a CSI-RS. This is not limited in this embodiment of this application. For example, the first set is {SSB 0, SSB 1, SSB 2, ..., SSB 13, SSB 14, SSB 15}, and the first reference signal is SSBs whose sequence numbers are from 0 to 15. The second set is {CSI-RS 0, CSI-RS 1, CSI-RS 2, ..., CSI-RS 61, CSI-RS 62, CSI-RS 63}, and the second reference signal is CSI-RSs whose sequence numbers are from 0 to 63. A relationship between the first set and the second set includes: An intersection set of the first set and the second set may be an empty set, or the first set may be a subset of the second set. This is not limited in this embodiment of this application.

Specifically, before the terminal device determines the estimated measurement result of the second reference signal based on the preset inference model and the measurement result of the first reference signal, the terminal device may receive port type information in the inference model and association relationship information from the network device. The port type information in the preset inference model includes data type information of each input port and each output port in the preset inference model, and the association relationship information includes a relationship between the input port in the preset inference model and the first reference signal and a relationship between the output port in the preset inference model and the second reference signal.

The preset inference model, the port type information, and the association relationship information may be carried in a same piece of signaling, may be separately carried in different pieces of signaling, or may be carried in a same piece of signaling in pairs. This is not limited in this embodiment of this application. In addition, a sequence of delivering the preset inference model, the port type information, and the association relationship information is also not limited.

The port type information indicates a physical meaning of port data, including a physical quantity and a measurement unit thereof. The terminal device may determine, based on a data type of an input port in configured port type information, a type of data that should be used as an input of the preset inference model when the preset inference model is used. Similarly, the terminal device may determine, based on a data type of an output port in configured port type information, a function of data output by the preset inference model. For example, the port type information includes one or more of the following: received power information of a reference signal, received signal strength indication information of the reference signal, optimal quality probability information of the reference signal, received signal related information of the reference signal, an angle of departure (angle of departure, AoD) of the reference signal, an angle of arrival (angle of arrival, AoA) of the reference signal, beam index information used for sending or receiving the reference signal, a beam weight used for sending or receiving the reference signal, location coordinate information of a terminal device when the reference signal is sent, posture and orientation information of the terminal device when the reference signal is sent, and identification information of the reference signal. The related information of the received signal of the reference signal may be a real part, an imaginary part, an amplitude, or a phase of the received signal. The identification information of the reference signal may be an index or a sequence number of the reference signal.

The port type information may be predefined in a protocol or may be configured by the network device. If the port type information is configured by the network device, a configuration of the port type information may be separately sent, may be carried when an RS is configured, or may be carried when the preset inference model is sent. When all port types are the same, all the port types may be indicated by using a unified parameter, or each port may be indicated by using an independent parameter. When port types are mixed, each port may be indicated by using an independent parameter, or ports of a same type may be indicated by using a unified parameter. Each port in the preset inference model corresponds to one type of port type information. Port type information corresponding to a first port in the preset inference model may be the same as or different from port type information corresponding to a second port in the preset inference model. The first port may be an input port or an output port of the preset inference model, and the second port may be an input port or an output port of the preset inference model.

For example, a port type 0 represents RSRP (unit: dBm, dBW, W, or mW) of a specific reference signal, 1 represents a maximum probability (unit: 1 or %) of RSRP of a specific reference signal, 2 represents a received signal amplitude (unit: dBm, dBW, W, or mW) of a specific reference signal, 3 represents a received signal phase (unit: 2π or degree) of a specific reference signal, and so on. When all port types are the same, all the port types may be indicated by using a unified parameter. For example, QuantityCommon = 0 indicates that types of all input and output ports are RSRP of a reference signal. Alternatively, data types of all input and output ports may be respectively indicated by using two common parameters. For example, InputQuantityCommon = 0 represents that all types of the input ports are RSRP of a reference signal, and OutputQuantityCommon = 1 represents that all types of the output ports are a probability of optimal reference signal quality. Alternatively, {InputID 0, QuantityType 2}, {InputID 1, QuantityType 2}, {InputID 2, QuantityType 3}, and {InputID 3, QuantityType 3} represent that types of an input port 0 and an input port 1 are a received signal amplitude of a reference signal, and types of an input port 2 and an input port 3 are a received signal phase of a reference signal. Alternatively, {QuantityType 2, InputID {0,1}}and {QuantityType 3, InputID {2,3}} represent that types of an input port 0 and an input port 1 are a received signal amplitude of a reference signal, and types of an input port 2 and an input port 3 are a received signal phase of a reference signal.

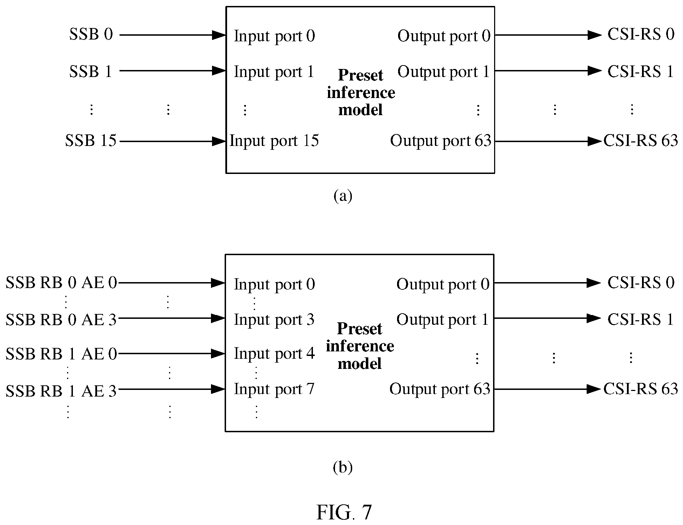

The association relationship information is related to the port type information. For some port types, one first reference signal corresponds to only one piece of (one-dimensional) data. For example, one first reference signal corresponds to only one RSRP value. For a port type of the one-dimensional data, the association relationship information may refer to a specific first reference signal from which the data of the port comes or to which the data of the port is applied. For example, as shown in (a) in FIG. 7, the first reference signal is an SSB, and the second reference signal is a CSI-RS. An input port 0 to an input port 15 are respectively associated with an SSB 0 to an SSB 15, and an output port 0 to an output port 63 are respectively associated with a CSI-RS 0 to a CSI-RS 63. Indexes of the associated reference signals do not need to be sequential or consecutive. For example, alternatively, the input port 0 to the input port 15 may be respectively associated with the SSBs {1, 5, 22, 11, 6, 17, 2, 12, 57, 7, 16, 18, 8, 9, 15, 19}. For the output ports, a case is similar. For some port types, one first reference signal corresponds to a plurality of pieces of (multi-dimensional) data, that is, one reference signal corresponds to a series of data. A received signal amplitude is used as an example. One received signal may include a plurality of dimensions such as a time domain, a frequency domain, and an antenna domain, and one antenna element on one frequency-domain subcarrier corresponds to one piece of received signal amplitude data at one moment. For a port type of such multi-dimensional data, the association relationship information may refer to a specific element of a specific reference signal or a specific type of reference signal from which the data of the port comes or to which the data of the port is applied. For example, as shown in (b) in FIG. 7, the first reference signal is an SSB, and the second reference signal is a CSI-RS. An input port 0 to an input port 3 are respectively associated with SSBs received by the terminal device on a 0^{th} to a 3^{rd} antenna element (antenna element, AE) on a frequency domain resource block (resource block, RB) 0, and an input port 4 to an input port 7 are respectively associated with SSBs received by the terminal on a 0^{th} to a 3^{rd} AE on an RB 1, and so on. Similarly, an association sequence is not limited. It should be noted that a mapping rule may be further predefined. For example, for some port types, one first reference signal corresponds to only one piece of (one-dimensional) data, and mapping in an index order may be defined. Certainly, there may be another mapping rule. This is not limited in this embodiment of this application. For example, for some port types, one first reference signal corresponds to a plurality of (multi-dimensional) data, that is, one reference signal corresponds to a series of data. One received signal may include a plurality of dimensions such as a time domain, a frequency domain, and an antenna domain, and one antenna element corresponds to one piece of received signal amplitude data on one frequency-domain subcarrier at one moment. The following may be defined: Mapping is preferentially performed in frequency domain, then mapping is performed in antenna domain, and finally mapping is performed in time domain. Certainly, there may be another mapping rule. This is not limited in this embodiment of this application.

The association relationship may be predefined in a protocol or may be configured by the network device. If the association relationship is configured by the network device, a configuration of the association relationship may be separately sent, or may be carried when the port type information is configured, may be carried when the RS is configured, or may be carried when the preset inference model is sent. This is not limited in this embodiment of this application.

Specifically, that the terminal device determines an estimated measurement result of the second reference signal based on the preset inference model and the measurement result of the first reference signal includes: The terminal device determines the estimated measurement result of the second reference signal based on the preset inference model, the measurement result of the first reference signal, the port type information in the preset inference model, and the association relationship information. Specifically, the terminal device inputs the measurement result of the first reference signal into the preset inference model based on the data type information of each input port in the port type information in the preset inference model and the relationship between the input port in the preset inference model and the first reference signal in the association relationship information; and the terminal device determines, based on the data type information of each output port in the port type information in the preset inference model and the relationship between the output port in the preset inference model and the second reference signal in the association relationship information, the estimated measurement result that is of the second reference signal and that is output from the preset inference model. In other words, the terminal device determines input data of the preset inference model based on an input port type in port types and an association relationship between the input port and the first reference signal in the association relationship information. After determining the input data of the preset inference model, the terminal device obtains output data through calculation by using the preset inference model sent by the network device. The terminal device determines, based on an output port type in the port types and an association relationship between the output port and the second reference signal in the association relationship, a physical meaning of the data output from the preset inference model, to further determine how to use the data.

For example, the first reference signal is an SSB, and the second reference signal is a CSI-RS. It is assumed that the preset inference model is a fully-connected deep neural network, and a network scale thereof is 16 neurons at an input layer, 64 neurons at an output layer, and 64 neurons at a hidden layer, where there is one hidden layer. In addition, each neuron may be represented as y = *f*(**w**^{T}**x** + b), where x is an input vector of the neuron, y is an output of the neuron, w and b are parameters of the neuron (where parameters of the neurons may be different), and *f* is a predefined or an activation function configured by a base station. Parameters of the preset inference model sent by the network device are parameters w and b of each neuron. It is assumed that the input port type in the port types is RSRP of the SSB, and an association relationship between the input port and the SSB in the association relationship information is shown in (a) in FIG. 7. Therefore, data of the input port 0 is an RSRP value obtained by measuring the SSB 0, data of the input port 1 is an RSRP value obtained by measuring the SSB 1, and so on. Therefore, the terminal device respectively inputs the measurement result of first reference signal, namely, RSRP of the SSB 0 to RSRP of the SSB 15, into the 16 neurons at the input layer, and may obtain 64 pieces of output data through calculation from the 64 neurons at the output layer. Then, the terminal device determines, based on the output port type in the port types and the association relationship between the output port and the second reference signal in the association relationship information, the physical meaning of the data output from the preset inference model, to further determine how to use the data. For example, the output port type in the port types is RSRP of the CSI-RS, and the association relationship between the output port and the SSB in the association relationship information is shown in (a) in FIG. 7. Therefore, 64 pieces of output data represent estimated RSRP values of the CSI-RS 0 to the CSI-RS 63, and the estimated RSRP values of the CSI-RS 0 to the CSI-RS 63 are the estimated measurement result of the second reference signal.

Step S606: The terminal device determines a candidate reference signal set based on the estimated measurement result of the second reference signal.

Specifically, the candidate reference signal set is the second set or a subset of the second set. The terminal device may determine the candidate reference signal set based on the estimated measurement results of the second reference signals by using a predefined rule. For example, the terminal device may select, as the candidate reference signal set, one or more second reference signals with largest estimated measurement result values in the estimated measurement result of the second reference signal. For example, the estimated RSRP values of the CSI-RS 0 to the CSI-RS 63 are the estimated measurement result of the second reference signal, and the terminal device may use N CSI-RSs with largest estimated RSRP values as the candidate reference signal, where N is greater than 0 and less than or equal to 63. For example, N = 3, and the candidate reference signal set includes CSI-RSs whose sequence numbers are 0, 8, and 16. N may be predefined in a protocol, configured by the network device, or determined by the terminal device. Certainly, the terminal device may alternatively determine the candidate reference signal set based on the estimated measurement result of the second reference signal by using another predefined rule. This is not limited in this embodiment of this application. Optionally, the terminal device may send the estimated measurement result of the second reference signal to the network device. For example, the terminal device may send all or a part of the estimated RSRP values of the CSI-RS 0 to the CSI-RS 63 to the network device.

Step S607: The terminal device measures the candidate reference signal in the candidate reference signal set to determine an actual measurement result of the candidate reference signal.

Specifically, the actual measurement result of the candidate reference signal may include actual RSRP, an SINR, RSRQ, and the like that are obtained by measuring the candidate reference signal in the candidate reference signal set. This is not limited in this embodiment of this application.

Step S608: The terminal device sends the actual measurement result of the candidate reference signal to the network device.

Specifically, before the terminal device sends the actual measurement result of the candidate reference signal to the network device, the terminal device receives resource configuration information from the network device, and then the terminal device may send the actual measurement result of the candidate reference signal to the network device based on the resource configuration information.

Specifically, the resource configuration information may include an RS resource configuration and a reporting resource configuration, where the reporting resource configuration is a resource configuration required when the terminal device reports the actual measurement result of the candidate reference signal. An RS may include an SSB and a CSI-RS. The CSI-RS may be a newly defined dedicated CSI-RS. A difference between the dedicated CSI-RS and a common CSI-RS lies in that: for the common CSI-RS, the network device assumes that the terminal device measures all configured and activated CSI-RSs; for the dedicated CSI-RS, the network device assumes that the terminal device selects, based on the preset inference model, a part of dedicated CSI-RSs to measure, that is, the network device assumes that the terminal device does not measure all configured and activated CSI-RSs. The dedicated CSI-RS may use a global index, that is, index information of different terminal devices in a cell is the same. A quantity of dedicated CSI-RSs is not limited by a quantity of common CSI-RSs. The dedicated CSI-RS may be associated with the common CSI-RS. To be specific, the network device configures both a newly defined global resource, for example, a dedicated CSI-RS resource, and a conventional resource, for example, a common CSI-RS resource, for the terminal device. The network device may notify the terminal device of a mapping relationship between the newly defined global resource and the conventional resource. For example, a dedicated CSI-RS 0 may be associated with a resource whose NZP-CSI-ResourceSetId is 0 and NZP-CSI-RS-ResourceId is 2. Optionally, a port of the preset inference model may also be associated with the dedicated CSI-RS.

Optionally, the resource configuration information may be predefined in a protocol or may be configured by the network device. If the resource configuration information is configured by the network device, the resource configuration information may be separately sent, may be carried when the association relationship is configured, may be carried when the port type information is configured, may be carried when the RS is configured, or may be carried when the preset inference model is sent. This is not limited in this embodiment of this application.

Specifically, the actual measurement result of the candidate reference signal includes one or more of the following: index information of a first candidate reference signal and reference signal received power RSRP of the first candidate reference signal; TCI-state activation recommendation information, where the TCI-state activation recommendation information includes an index of a TCI-state associated with the first candidate reference signal; or TCI-state update recommendation information, where the TCI-state update recommendation information includes the TCI-state index and the index information of the first candidate reference signal. The first candidate reference signal includes one or more candidate reference signals in the candidate reference signal set. This may be understood as that the candidate reference signal is a reference signal selected by the terminal device for measurement. The first reference signal may be a reference signal with better signal quality in the candidate reference signals. In other words, the first candidate reference signal may be all candidate reference signals in the candidate reference signal set, or may be some candidate reference signals in the candidate reference signal set. For example, the candidate reference signal set includes CSI-RSs whose sequence numbers are 0, 8, and 16. The first candidate reference signal may be a reference signal with better signal quality in at least one candidate reference signal. For example, the CSI-RS with the sequence number 0 and the CSI-RS with the sequence number 8 have better signal quality compared with the CSI-RS with the sequence number 16, and the first candidate reference signal is the CSI-RS with the sequence number 0 and the sequence number 8. It should be noted that, when the first candidate reference signal includes one CSI-RS, a measurement result corresponding to the CSI-RS may be obtained (for example, an average value is obtained) based on results of the CSI-RS that are obtained in a plurality of measurements. The index information of the first candidate reference signal may include NZP-CSI-ResourceSetId and an index of the first candidate reference signal in NZP-CSI-ResourceSet, or the index information of the first candidate reference signal includes a global index corresponding to the first candidate reference signal.

Specifically, index information of the TCI-state associated with the first candidate reference signal may be TCI-state identification information, for example, a TCI-state ID. When the actual measurement result of the candidate reference signal includes the TCI-state activation recommendation information, where the TCI-state activation recommendation information includes the index of the TCI-state associated with the first candidate reference signal, it indicates that the terminal device requests the network device to activate the index of the TCI-state associated with the first candidate reference signal. Correspondingly, after the network device receives the index of the TCI-state associated with the first candidate reference signal, optionally, the network device may send first indication information to the terminal device, where the first indication information indicates whether the network device agrees to activate the TCI-state associated with the first candidate reference signal, and the first indication information may be carried in DCI. For example, if the protocol allows the terminal device to feed back an index of only one TCI-state recommended being activated, the first indication information may be a 1-bit acknowledgment identifier. For example, "1" indicates acknowledgment of activation, to be specific, the network device agrees to the activation; "0" or a default value indicates rejection of activation, that is, the network device rejects the activation. If the protocol allows feedback of indexes of only a plurality of TCI-states recommended being activated, the first indication information may be a bitmap, where a length of the bitmap is a quantity of TCI-states recommended being activated, and all bits one-to-one correspond, in a predefined order, to the TCI-states recommended being activated. For example, if the terminal device feeds back indexes 1, 7, and 8 of TCI-states recommended being activated, the network device sends the first indication information to the terminal device, where the first indication information is a 3-bit bitmap, for example, 011, indicating that it is confirmed that TCI-states whose TCI-state ID indexes are 7 and 8 are activated, to be specific, the network device agrees to activate the TCI-states whose TCI-state ID indexes are 7 and 8, but rejects to activate the TCI-state whose TCI-state ID index is 1, in other words, the network device rejects activation of the TCI-state whose TCI-state ID index is 1.

Specifically, when the actual measurement result of the candidate reference signal includes the TCI-state update recommendation information, where the TCI-state update recommendation information includes the TCI-state index and the index information of the first candidate reference signal, it indicates that the terminal device recommends that the network device replace a reference signal in the TCI-state corresponding to the TCI-state ID with a reference signal corresponding to the index information of the first candidate reference signal. Correspondingly, after the network device receives the TCI-state index and the index information of the first candidate reference signal, optionally, the network device may send second indication information to the terminal device, where the second indication information indicates whether the TCI-state corresponding to the TCI-state index is updated, and the second indication information may be carried in MAC CE or DCI. For example, if the protocol allows the terminal device to feed back an index of only one TCI-state recommended being updated, the second indication information may be a 1-bit acknowledgment identifier. For example, "1" indicates acknowledgment of an update, to be specific, the network device agrees to the update, and "0" or a default value indicates rejection of the update, to be specific, the network device rejects the update. If the protocol allows feedback of indexes of only a plurality of TCI-states recommended being updated, the second indication information may be a bitmap, where a length of the bitmap is a quantity of TCI-states recommended being updated, and all bits one-to-one correspond, in a predefined order, to the indexes of the TCI-states recommended being updated. For example, if the terminal device feeds back indexes 1, 7, and 8 of TCI-states recommended being updated, the network device sends the second indication information to the terminal device. The second indication information is a 3-bit bitmap, for example, 011, indicating that it is confirmed that TCI-states whose TCI-state ID indexes are 7 and 8 are updated, to be specific, the network device agrees to update the TCI-states whose TCI-state ID indexes are 7 and 8, but rejects to update the TCI-state whose TCI-state ID index is 1, in other words, the network device rejects an update of the TCI-state whose TCI-state ID index is 1.

In a possible implementation, the method further includes: The terminal device receives reporting type information from the network device, where the reporting type information includes a TCI-state activation recommendation and/or a TCI-state update recommendation. Optionally, the reporting type information may be predefined, in a protocol, to be reported by default, or may be configured and selected by the network device for reporting. For example, the reporting type information may be configured by using a reportQuantity field of an information element CSI-ReportConfig in RRC signaling or a derivative field (for example, reportQuantity-r18 or reportQuantity-r19) thereof. Options of tci-state-activate and/or tci-state-update are added to the reportQuantity field.

In another possible implementation, when the reporting type information includes the TCI-state activation recommendation, the actual measurement result of the candidate reference signal includes TCI-state activation recommendation information, and the TCI-state activation recommendation information includes the index of the TCI-state associated with the first candidate reference signal; or when the reporting type information includes the TCI-state update recommendation, the actual measurement result of the candidate reference signal includes the TCI-state update recommendation information, and the TCI-state update recommendation information includes the TCI-state index and the index information of the first candidate reference signal. For details, refer to the foregoing descriptions. Details are not described herein.

In still another possible implementation, the method further includes: The terminal device receives first indication information from the network device when the actual measurement result of the candidate reference signal includes the TCI-state activation recommendation information, where the first indication information indicates whether the network device agrees to activate the TCI-state associated with the first candidate reference signal; or the terminal device receives second indication information from the network device when the actual measurement result of the candidate reference signal includes the TCI-state update recommendation information, where the second indication information indicates whether the network device agrees to update the TCI-state. For details, refer to the foregoing descriptions. Details are not described herein.

To verify validity of the preset inference model, optionally, the terminal device receives a validity parameter of the preset inference model from the network device, and the terminal device determines, based on the validity parameter of the preset inference model, whether the preset inference model is valid.

Specifically, the validity parameter of the preset inference model includes one or more of the following: a relative beam gain of the second reference signal to the first reference signal, a beam gain estimation error reference value of the second reference signal, a model invalidation count threshold, or a model invalidation count time window length. The relative beam gain of the second reference signal to the first reference signal and/or the beam gain estimation error reference value of the second reference signal are/is mandatory, and the model invalidation count threshold and/or the model invalidation count time window length are/is optional. Optionally, the validity parameter of the preset inference model may be predefined in a protocol or may be configured by the network device. If configured by the network device, the validity parameter of the preset inference model may be separately sent, may be carried when the resource configuration information is configured, may be carried when the association relationship is configured, may be carried when the port type information is configured, may be carried when the RS is configured, or may be carried when the preset inference model is sent. This is not limited in this embodiment of this application.

In a possible implementation, when the validity parameter of the preset inference model includes the relative beam gain of the second reference signal to the first reference signal, that the terminal device determines, based on the validity parameter of the preset inference model, whether the preset inference model is valid includes: The terminal device compares the actual measurement result of the candidate reference signal and the measurement result of the first reference signal with the relative beam gain of the second reference signal to the first reference signal to determine whether the preset inference model is valid.

Specifically, the second reference signal may be a CSI-RS, and the first reference signal may be an SSB. The gain may use any one or more dimensions, for example, RSRP and an SNR, used to measure signal quality. A specific type may be predefined in a protocol or may be configured by the network device. When a difference between a largest value in the actual measurement result of the candidate reference signal and a largest value in the measurement result of the first reference signal is greater than the relative beam gain of the second reference signal to the first reference signal, it is determined that the preset inference model is valid; or when a difference between a largest value in the actual measurement result of the candidate reference signal and a largest value in the measurement result of the first reference signal is less than or equal to the relative beam gain of the second reference signal to the first reference signal, it is determined that the preset inference model is invalid. The foregoing uses a manner in which the difference is used. Certainly, another manner may alternatively be used to determine whether the preset inference model is valid. This is not limited in this embodiment of this application.

For example, the second reference signal may be a CSI-RS, and the first reference signal may be an SSB. The network device uses a discrete Fourier transform (discrete Fourier transform, DFT) beam. The network device sends the CSI-RS by using all antenna arrays, but the network device sends the SSB by using one-fourth of antenna arrays. In an ideal case, RSRP of an optimal CSI-RS beam may be 6 dBm higher than RSRP of an optimal SSB beam. In other words, this may be understood as that the relative beam gain of the second reference signal to the first reference signal is 6 dBm. Similarly, if the network device sends the SSB by using one-half of antenna arrays, RSRP of an optimal CSI-RS beam is 3 dBm higher than RSRP of an optimal SSB beam. In other words, this may be understood as that the relative beam gain of the second reference signal to the first reference signal is 3 dBm. Correspondingly, the relative beam gain of the second reference signal to the first reference signal may be determined by the network device based on beams used for sending the first reference signal and the second reference signal or may be predefined in a protocol.

For example, the second reference signal may be a CSI-RS, the first reference signal may be an SSB, and the relative beam gain of the second reference signal to the first reference signal is 6 dBm. Measurement results of first reference signals include RSRP measurement values of SSBs whose sequence numbers are 0 to 15, where the RSRP measurement value of the SSB whose sequence number is 1 is the largest and is 100 dBm. Actual measurement results of candidate reference signals include RSRP measurement values of CSI-RSs whose sequence numbers are 0 to 63, where the RSRP measurement value of the CSI-RS whose sequence number is 16 is the largest and is 110 dBm. A difference between the RSRP measurement value 110 dBm of the CSI-RS whose sequence number is 16 and the RSRP measurement value 110 dBm of the SSB whose sequence number is 1 is 10 dBm. 10 dBm > 6 dBm. Therefore, the preset inference model is valid.

In another possible implementation, when the validity parameter of the preset inference model includes the beam gain estimation error reference value of the second reference signal; and that the terminal device determines, based on the validity parameter of the preset inference model, whether the preset inference model is valid includes: The terminal device compares the estimated measurement result of the second reference signal and the actual measurement result of the candidate reference signal with the beam gain estimation error reference value of the second reference signal to determine whether the preset inference model is valid.

Specifically, the second reference signal may be a CSI-RS, and the first reference signal may be an SSB. The gain may use any one or more dimensions, for example, RSRP and an SNR, used to measure signal quality. A specific type may be predefined in a protocol or may be configured by the network device.

Optionally, when an absolute value of a difference between the actual measurement result of the candidate reference signal and the estimated measurement result of the second reference signal is less than the beam gain estimation error reference value of the second reference signal, it is determined that the preset inference model is valid; or when an absolute value of a difference between an actual measurement result of at least one candidate reference signal and the estimated measurement result of the second reference signal is greater than or equal to the beam gain estimation error reference value of the second reference signal, it is determined that the preset inference model is invalid. The foregoing uses a manner in which the absolute value of the difference is used. Certainly, another calculation manner, for example, a square manner or a root number manner, may alternatively be used to determine whether the preset inference model is valid. This is not limited in this embodiment of this application.

For example, the second reference signal may be a CSI-RS, the first reference signal may be an SSB, and the beam gain estimation error reference value of the second reference signal is 2 dBm. Estimated measurement results of second reference signals include estimated RSRP values of CSI-RSs whose sequence numbers are 0 to 63, and the estimated RSRP values of the CSI-RSs whose sequence numbers are 0 to 3 are the largest and are respectively 108 dBm, 106 dBm, 107 dBm, and 106 dBm. Correspondingly, the terminal device determines the CSI-RSs whose sequence numbers are 0 to 3 as candidate reference signals, and measures the CSI-RSs whose sequence numbers are 0 to 3 to obtain actual measurement results of the candidate reference signals, where the actual measurement results of the candidate reference signals include actual RSRP measurement values that are of the CSI-RSs whose sequence numbers are 0 to 3 and that are respectively 109 dBm, 105 dBm, 107 dBm, and 107 dBm, and absolute values of differences between the actual RSRP measurement values of the CSI-RSs whose sequence numbers are 0 to 3 and the estimated RSRP values of the CSI-RSs whose sequence numbers are 0 to 3, that is, absolute values of differences between the actual measurement results of the candidate reference signals and estimated measurement results of corresponding second reference signals are respectively 1 dBm, 1 dBm, 0 dBm, and 1 dBm. Because the absolute values of the differences are less than the beam gain estimation error reference value 2 dBm of the second reference signal, the preset inference model is valid.

In still another possible implementation, when the validity parameter of the preset inference model includes the model invalidation count threshold, that the terminal device determines, based on the validity parameter of the preset inference model, whether the preset inference model is valid includes: When the terminal device determines that a quantity of times the preset inference model is invalid is less than the model invalidation count threshold, the terminal device determines that the preset inference model is valid; or when the terminal device determines that a quantity of times the preset inference model is invalid is greater than or equal to the model invalidation count threshold, the terminal device determines that the preset inference model is invalid.

Specifically, before the terminal device determines, based on the relative beam gain of the second reference signal to the first reference signal and/or the beam gain estimation error reference value of the second reference signal, whether the preset inference model is valid, the terminal device starts a counter. When the terminal device determines, based on the relative beam gain of the second reference signal to the first reference signal and/or the beam gain estimation error reference value of the second reference signal, that the preset inference model is invalid, a value of the counter increases, for example, the value of the counter is incremented by 1. When the value of the counter is equal to the model invalidation count threshold, after the terminal device determines that the preset inference model is invalid, the terminal device performs a reset operation on the counter. Optionally, the terminal device sends an invalidity identifier of the preset inference model to the network device. Optionally, the model invalidation count threshold may be configured by the network device or may be predefined in a protocol. This is not limited in this embodiment of this application.

For example, the model invalidation count threshold is 3. Before the terminal device determines, based on the relative beam gain of the second reference signal to the first reference signal and/or the beam gain estimation error reference value of the second reference signal, whether the preset inference model is valid, the terminal device starts the counter. When the terminal device determines, based on the relative beam gain of the second reference signal to the first reference signal and/or the beam gain estimation error reference value of the second reference signal, that the preset inference model is invalid, the value of the counter increases, for example, the counter is incremented by 1. In a preset time period, if the value of the counter is 3, it is equivalent to that the model invalidation count threshold is 3. The terminal device determines that the preset inference model is invalid. Optionally, the terminal device sends the invalidity identifier, for example, 0, of the preset inference model to the network device.

In the foregoing method, the model invalidation count threshold is used to assist in determining whether the preset inference model is valid. This can avoid frequent model updates caused by a case in which the model is determined to be invalid in a specific measurement due to an accidental factor.

In still another possible implementation, the validity parameter of the preset inference model includes the model invalidation count time window length; and the method further includes: The terminal device starts a timer, and the terminal device performs a reset operation on the counter when a value of the timer exceeds the model invalidation count time window length. In other words, this may be understood as that after the terminal device starts the counter, the counter may be a model invalidation counter, and the terminal device starts a timer. When a value of the timer exceeds the model invalidation count time window length, regardless of whether the counter performs counting or regardless of a count value, the terminal device resets both the counter and the timer, and restarts counting and timing. In other words, this may be understood as that the terminal device also performs the reset operation on the timer when the terminal device performs the reset operation on the counter. The model invalidation count time window length may be configured by the network device or may be predefined in a protocol.

In the foregoing method, the model invalidation count time window length may be used to assist in determining model invalidation time, thereby saving time.

In still another possible implementation, when the terminal device determines that the preset inference model is valid, the actual measurement result of the candidate reference signal further includes a validity identifier of the preset inference model; or when the terminal device determines that the preset inference model is invalid, the actual measurement result of the candidate reference signal further includes an invalidity identifier of the preset inference model.

For example, when the validity parameter of the preset inference model includes the relative beam gain of the second reference signal to the first reference signal and/or the beam gain estimation error reference value of the second reference signal, and the terminal device determines, based on the relative beam gain of the second reference signal to the first reference signal and/or the beam gain estimation error reference value of the second reference signal, that the preset inference model is valid, the terminal device sends the actual measurement result of the candidate reference signal to the network device. Optionally, the terminal device sends the validity identifier of the preset inference model to the network device, or that the preset inference model is valid by default is predefined in a protocol. Optionally, the actual measurement result of the candidate reference signal and the validity identifier of the preset inference model may be carried in a same piece of signaling or different pieces of signaling. When the terminal device determines, based on the relative beam gain of the second reference signal to the first reference signal and/or the beam gain estimation error reference value of the second reference signal, that the preset inference model is invalid, optionally, the terminal device sends the invalidity identifier of the preset inference model to the network device, or that the preset inference model is invalid by default is predefined in a protocol. Optionally, regardless of whether the terminal device determines that the preset inference model is valid or invalid, the terminal device may send the measurement result of the first reference signal to the network device.

In the foregoing method, the terminal device determines the estimated measurement result of the second reference signal based on the preset inference model and the measurement result of the first reference signal, and determines the candidate reference signal set based on the estimated measurement result of the second reference signal, to measure the candidate reference signal in the candidate reference signal set to determine the actual measurement result of the candidate reference signal, to be specific, measure a part or all of second reference signals sent by the network device. Compared with a current technology in which all of the second reference signals sent by the network device need to be measured, a measurement amount is reduced, thereby reducing energy consumption of the terminal device. In addition, the terminal device may further determine, based on the validity parameter of the preset inference model, whether the preset inference model is valid, so that validity of the preset inference model can be detected in real time, and periodic traversal measurement is avoided, thereby reducing power consumption of the terminal. In addition, the network device may further configure the reporting type information for the terminal device, and correspondingly, the terminal device determines an actual measurement result of a reported candidate reference signal based on the reporting type information, so that signaling exchange can be simplified, thereby reducing signaling overheads and a delay.

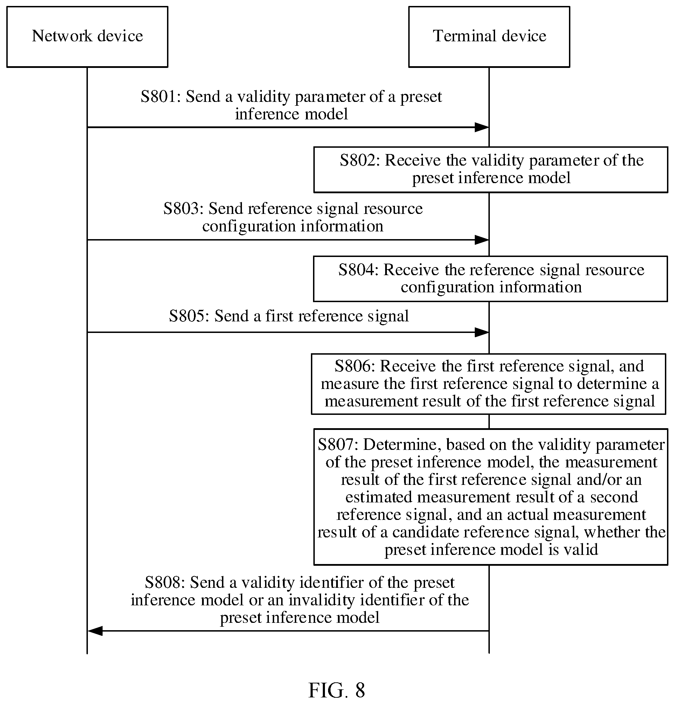

FIG. 8 shows a communication method according to an embodiment of this application. The method includes but is not limited to the following steps.

Step S801: A network device sends a validity parameter of a preset inference model to a terminal device.

Step S802: The terminal device receives the validity parameter of the preset inference model from the network device.

Specifically, the validity parameter of the preset inference model includes one or more of the following: a relative beam gain of the second reference signal to the first reference signal, a beam gain estimation error reference value of the second reference signal, a model invalidation count threshold, or a model invalidation count time window length. For details, refer to related descriptions in step S608. Details are not described herein.

Step S803: The network device sends reference signal resource configuration information to the terminal device.

The reference signal resource configuration information may include an RS resource configuration and a reporting resource configuration, where the reporting resource configuration is a resource configuration required when the terminal device reports an actual measurement result of a candidate reference signal. For details, refer to related descriptions of the resource configuration information in step S608. Details are not described herein.

Step S804: The terminal device receives the reference signal resource configuration information from the network device.

Step S805: The network device sends a first reference signal to the terminal device.

Step S806: The terminal device receives the first reference signal from the network device, and measures the first reference signal to determine a measurement result of the first reference signal.

For details, refer to step S604. Details are not described herein. It should be noted that there is no specific sequence relationship between step S801 and step S802 and step S803 and step S804.

Step S807: The terminal device determines, based on the validity parameter of the preset inference model, the measurement result of the first reference signal and/or an estimated measurement result of the second reference signal, and the actual measurement result of the candidate reference signal, whether the preset inference model is valid.

Specifically, the preset inference model may be obtained through training by the terminal device or may be configured by the network device. This is not limited in this embodiment of this application.

The measurement result of the first reference signal, the estimated measurement result of the second reference signal, and the actual measurement result of the candidate reference signal are obtained in the following manner: The terminal device receives the preset inference model from the network device; the terminal device receives the first reference signal from the network device, and measures the first reference signal to determine the measurement result of the first reference signal, where the first reference signal includes a reference signal that belongs to a first set; the terminal device determines the estimated measurement result of the second reference signal based on the preset inference model and the measurement result of the first reference signal, where the second reference signal includes a reference signal that belongs to a second set; the terminal device determines a candidate reference signal set based on the estimated measurement result of the second reference signal, where the candidate reference signal set is the second set or a subset of the second set; and the terminal device measures the candidate reference signal in the candidate reference signal set to determine the actual measurement result of the candidate reference signal. For details, refer to step S601 to step S608 in the foregoing. Details are not described herein.

In a possible implementation, when the validity parameter of the preset inference model includes the relative beam gain of the second reference signal to the first reference signal, that the terminal device determines, based on the validity parameter of the preset inference model, the measurement result of the first reference signal, and the actual measurement result of the candidate reference signal, whether the preset inference model is valid includes: The terminal device compares the actual measurement result of the candidate reference signal and the measurement result of the first reference signal with the relative beam gain of the second reference signal to the first reference signal to determine whether the preset inference model is valid. For details, refer to step S608 in the foregoing. Details are not described herein.

In another possible implementation, when the validity parameter of the preset inference model includes the beam gain estimation error reference value of the second reference signal, that the terminal device determines, based on the validity parameter of the preset inference model, the estimated measurement result of the second reference signal, and the actual measurement result of the candidate reference signal, whether the preset inference model is valid includes: The terminal device compares the actual measurement result of the candidate reference signal and the estimated measurement result of the second reference signal with the beam gain estimation error reference value of the second reference signal to determine whether the preset inference model is valid. For details, refer to step S608 in the foregoing. Details are not described herein.

Step S808: The terminal device sends a validity identifier of the preset inference model or an invalidity identifier of the preset inference model to the network device.

For details, refer to step S608 in the foregoing. Details are not described herein.

In still another possible implementation, when the terminal device determines that the preset inference model is valid, the actual measurement result of the candidate reference signal further includes a validity identifier of the preset inference model; or when the terminal device determines that the preset inference model is invalid, the actual measurement result of the candidate reference signal further includes an invalidity identifier of the preset inference model. For details, refer to step S608 in the foregoing. Details are not described herein.

In the foregoing method, the terminal device may determine, based on the validity parameter of the preset inference model, whether the preset inference model is valid, so that validity of the preset inference model can be detected in real time, and periodic traversal measurement is avoided, thereby reducing power consumption of the terminal.

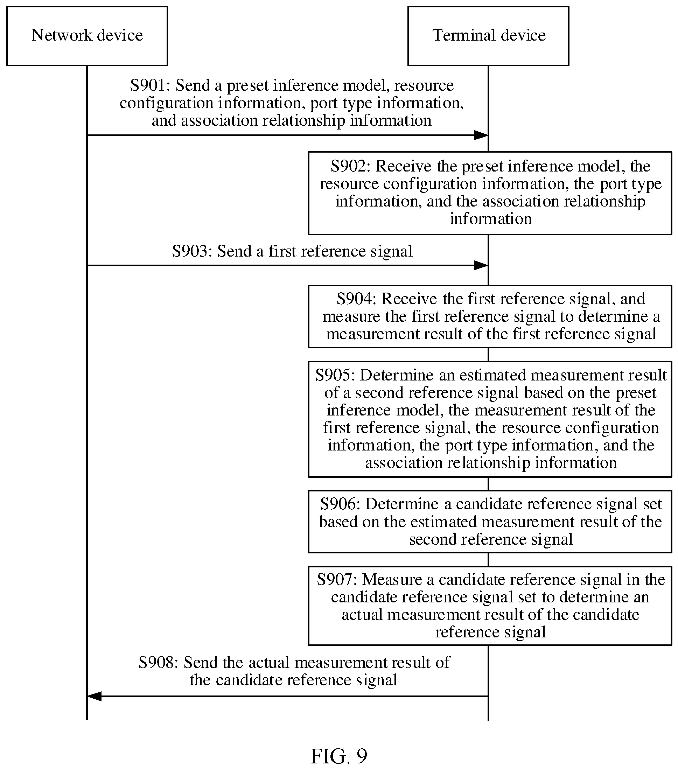

FIG. 9 shows a communication method according to an embodiment of this application. The method includes but is not limited to the following steps.

Step S901: A network device sends a preset inference model, resource configuration information, port type information, and association relationship information to a terminal device.

Specifically, for the preset inference model, refer to related descriptions in step S601. For the resource configuration information, the port type information, and the association relationship information, refer to related descriptions in step S605.

Step S902: The terminal device receives the preset inference model, the resource configuration information, the port type information, and the association relationship information from the network device.

Step S903: The network device sends a first reference signal to the terminal device.

For details, refer to the description of step S603. Details are not described herein.

Step S904: The terminal device receives the first reference signal from the network device, and measures the first reference signal to determine a measurement result of the first reference signal.

Step S905: The terminal device determines an estimated measurement result of a second reference signal based on the preset inference model, the measurement result of the first reference signal, the resource configuration information, the port type information, and the association relationship information.

For details, refer to the description of step S605. Details are not described herein.

For step S906 to step S908, refer to step S606 to step S608. Details are not described herein.

In the foregoing method, the terminal device determines the estimated measurement result of the second reference signal based on the preset inference model and the measurement result of the first reference signal, and determines the candidate reference signal set based on the estimated measurement result of the second reference signal, to measure the candidate reference signal in the candidate reference signal set to determine the actual measurement result of the candidate reference signal, to be specific, measure a part or all of second reference signals sent by the network device. Compared with a current technology in which all of the second reference signals sent by the network device need to be measured, a measurement amount is reduced, thereby reducing energy consumption of the terminal device.

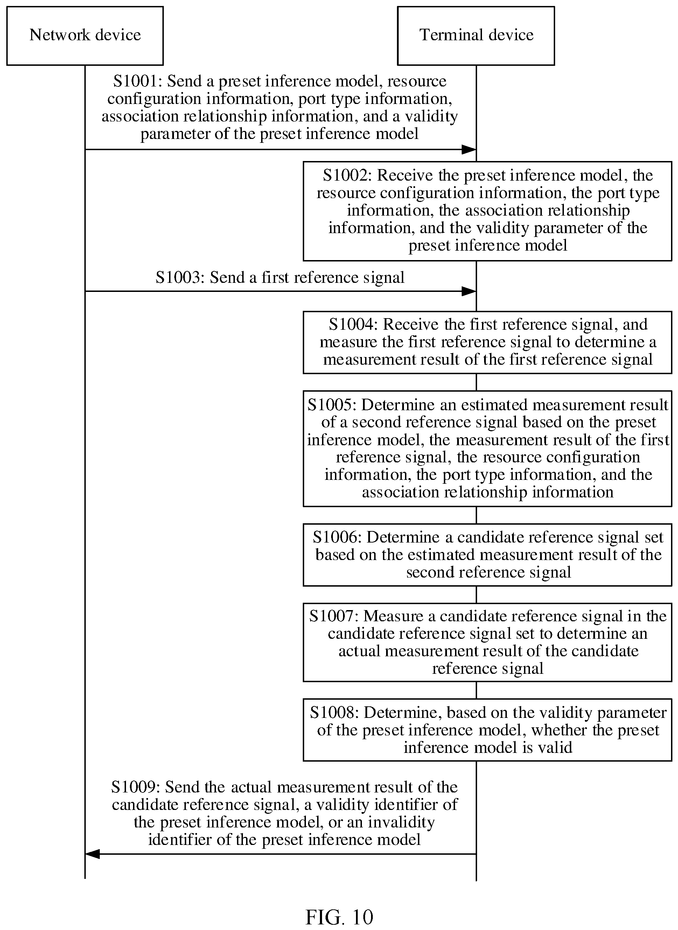

FIG. 10 shows a communication method according to an embodiment of this application. The method includes but is not limited to the following steps.

Step S1001: A network device sends a preset inference model, resource configuration information, port type information, association relationship information, and a validity parameter of the preset inference model to a terminal device.

Specifically, for the preset inference model, refer to related descriptions in step S601. For the resource configuration information, the port type information, and the association relationship information, refer to related descriptions in step S605. For the validity parameter of the preset inference model, refer to related descriptions in step S608.

Step S1002: The terminal device receives the preset inference model, the resource configuration information, the port type information, the association relationship information, and the validity parameter of the preset inference model from the network device.

Step S1003: The network device sends a first reference signal to the terminal device.

For details, refer to the description of step S603. Details are not described herein.

Step S1004: The terminal device receives the first reference signal from the network device, and measures the first reference signal to determine a measurement result of the first reference signal.

Step S1005: The terminal device determines an estimated measurement result of a second reference signal based on the preset inference model, the measurement result of the first reference signal, the resource configuration information, the port type information, and the association relationship information.

For details, refer to the description of step S605. Details are not described herein.

Step S1006: The terminal device determines a candidate reference signal set based on the estimated measurement result of the second reference signal.

For details, refer to the description of step S606. Details are not described herein.

Step S1007: The terminal device measures a candidate reference signal in the candidate reference signal set to determine an actual measurement result of the candidate reference signal.

For details, refer to the description of step S607. Details are not described herein.

Step S1008: The terminal device determines, based on the validity parameter of the preset inference model, whether the preset inference model is valid.

For details, refer to related descriptions in step S608. Details are not described herein.

Step S1009: The terminal device sends the actual measurement result of the candidate reference signal, a validity identifier of the preset inference model, or an invalidity identifier of the preset inference model to the network device.

When the terminal device determines that the preset inference model is valid, the terminal device sends the actual measurement result of the candidate reference signal to the network device. Optionally, the terminal device sends the validity identifier of the preset inference model to the network device. Optionally, the terminal device may send the measurement result of the first reference signal to the network device. When the terminal device determines that the preset inference model is invalid, the terminal device sends the invalidity identifier of the preset inference model to the network device. Optionally, the terminal device may send the measurement result of the first reference signal to the network device. For details, refer to related descriptions in step S608. Details are not described herein.

In the foregoing method, the terminal device may determine, based on the validity parameter of the preset inference model, whether the preset inference model is valid, so that validity of the preset inference model can be detected in real time, and periodic traversal measurement is avoided, thereby reducing power consumption of the terminal.

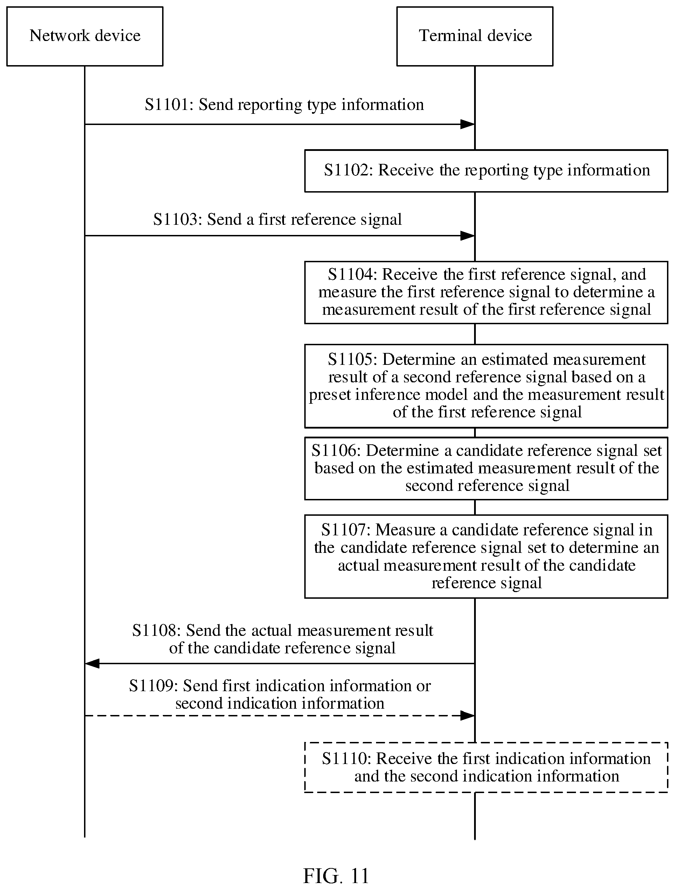

FIG. 11 shows a communication method according to an embodiment of this application. The method includes but is not limited to the following steps.

Step S1101: A network device sends reporting type information to a terminal device.

For details, refer to related descriptions in step S608. Details are not described herein. Optionally, the network device may further send one or more of the following to the terminal device: a preset inference model, resource configuration information, port type information, association relationship information, or a validity parameter of the preset inference model. Specifically, for the preset inference model, refer to related descriptions in step S601. For the resource configuration information, the port type information, and the association relationship information, refer to related descriptions in step S605. For the validity parameter of the preset inference model, refer to related descriptions in step S608.

Step S1102: The terminal device receives the reporting type information from the network device.

Step S1103: The network device sends a first reference signal to the terminal device.

Step S1104: The terminal device receives the first reference signal from the network device, and measures the first reference signal to determine a measurement result of the first reference signal.

For details, refer to related descriptions in step S604.

Step S1105: The terminal device determines an estimated measurement result of a second reference signal based on the preset inference model and the measurement result of the first reference signal.

For details, refer to related descriptions in step S605.

Step S1106: The terminal device determines a candidate reference signal set based on the estimated measurement result of the second reference signal.

For details, refer to related descriptions in step S606.

Step S1107: The terminal device measures a candidate reference signal in the candidate reference signal set to determine an actual measurement result of the candidate reference signal.

For details, refer to related descriptions in step S607.

Step S1108: The terminal device sends the actual measurement result of the candidate reference signal to the network device.

Specifically, when the reporting type information includes a TCI-state activation recommendation, the actual measurement result of the candidate reference signal includes TCI-state activation recommendation information, and the TCI-state activation recommendation information includes an index of a TCI-state associated with a first candidate reference signal; or when the reporting type information includes a TCI-state update recommendation, the actual measurement result of the candidate reference signal includes TCI-state update recommendation information, and the TCI-state update recommendation information includes the TCI-state index and the index information of the first candidate reference signal. For details, refer to related descriptions in step S608. Details are not described herein.

Step S1109: The network device sends first indication information or second indication information to the terminal device.

This step is an optional step.

Step S1110: The terminal device receives the first indication information and the second indication information from the network device.

This step is an optional step. The terminal device receives the first indication information from the network device when the actual measurement result of the candidate reference signal includes the TCI-state activation recommendation information, where the first indication information indicates whether the network device agrees to activate the TCI-state associated with the first candidate reference signal; or the terminal device receives the second indication information from the network device when the actual measurement result of the candidate reference signal includes the TCI-state update recommendation information, where the second indication information indicates whether the network device agrees to update the TCI-state. For details, refer to related descriptions in step S608. Details are not described herein.

In the foregoing method, the network device configures the reporting type information for the terminal device, and correspondingly, the terminal device determines an actual measurement result of a reported candidate reference signal based on the reporting type information, so that signaling exchange can be simplified, thereby reducing signaling overheads and a delay.

The methods in embodiments of this application are described in detail above. Apparatuses in embodiments of this application are provided below.

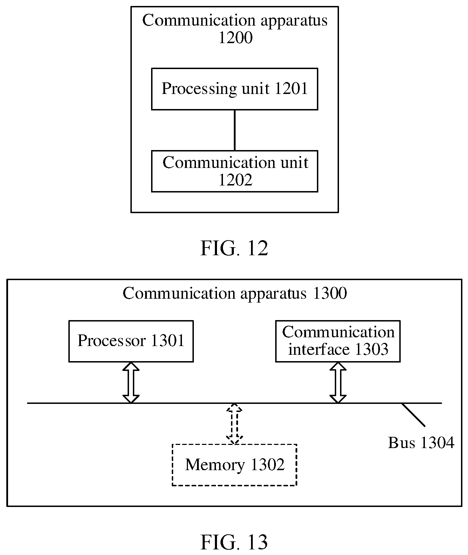

FIG. 12 is a diagram of a structure of a communication apparatus 1200 according to an embodiment of this application. The communication apparatus 1200 may include a processing unit 1201 and a communication unit 1202. Detailed descriptions of the units are as follows.

The communication unit 1202 is configured to receive a preset inference model from a network device; the communication unit 1202 is configured to receive a first reference signal from the network device, and measure the first reference signal to determine a measurement result of the first reference signal, where the first reference signal includes a reference signal that belongs to a first set; the processing unit 1201 is configured to determine an estimated measurement result of a second reference signal based on the preset inference model and the measurement result of the first reference signal, where the second reference signal includes a reference signal that belongs to a second set; the processing unit 1201 is configured to determine a candidate reference signal set based on the estimated measurement result of the second reference signal, where the candidate reference signal set is the second set or a subset of the second set; and the processing unit 1201 is configured to measure a candidate reference signal in the candidate reference signal set to determine an actual measurement result of the candidate reference signal.

In a possible implementation, the communication unit 1202 is further configured to receive port type information in the preset inference model and association relationship information from the network device, where the port type information in the preset inference model includes data type information of each input port and each output port in the preset inference model, and the association relationship information includes a relationship between the input port in the preset inference model and the first reference signal and a relationship between the output port in the preset inference model and the second reference signal; and the processing unit 1201 is further configured to determine the estimated measurement result of the second reference signal based on the preset inference model, the measurement result of the first reference signal, the port type information in the preset inference model, and the association relationship information.

In another possible implementation, each port in the preset inference model corresponds to one type of port type information, and port type information corresponding to a first port in the preset inference model is the same as port type information corresponding to a second port in the preset inference model.

In still another possible implementation, each port in the preset inference model corresponds to one type of port type information, and port type information corresponding to a first port in the preset inference model is different from port type information corresponding to a second port in the preset inference model.

In still another possible implementation, the port type information in the preset inference model includes one or more of the following: receive power information of a reference signal, received signal strength indication information of the reference signal, optimal quality probability information of the reference signal, received signal related information of the reference signal, an angle of departure AoD of the reference signal, an angle of arrival AoA of the reference signal, beam index information used for sending or receiving the reference signal, a beam weight used for sending or receiving the reference signal, location coordinate information of a terminal device when the reference signal is sent, posture and orientation information of the terminal device when the reference signal is sent, and identification information of the reference signal.

In still another possible implementation, the processing unit 1201 is configured to input a measurement result of the first reference signal into the preset inference model based on data type information of each input port in the port type information in the preset inference model and a relationship between the input port in the preset inference model and the first reference signal in the association relationship information. The processing unit 1201 is configured to determine, based on the data type information of each output port in the port type information in the preset inference model and the relationship between the output port in the preset inference model and the second reference signal in the association relationship information, an estimated measurement result of the second reference signal output by the preset inference model.

In still another possible implementation, the communication unit 1202 is further configured to receive resource configuration information from the network device; and the communication unit 1202 is further configured to send the actual measurement result of the candidate reference signal to the network device based on the resource configuration information.

In still another possible implementation, the actual measurement result of the candidate reference signal includes one or more of the following: index information of a first candidate reference signal and reference signal received power RSRP of the first candidate reference signal; TCI-state activation recommendation information, where the TCI-state activation recommendation information includes an index of a transmission configuration indicator state TCI-state associated with the first candidate reference signal; or TCI-state update recommendation information, where the TCI-state update recommendation information includes the TCI-state index and the index information of the first candidate reference signal, where the first candidate reference signal includes one or more candidate reference signals in the candidate reference signal set.

In still another possible implementation, the communication unit 1202 is further configured to send the measurement result of the first reference signal to the network device.

In still another possible implementation, the communication unit 1202 is further configured to receive reporting type information from the network device, where the reporting type information includes a TCI-state activation recommendation and/or a TCI-state update recommendation.

In still another possible implementation, when the reporting type information includes the TCI-state activation recommendation, the actual measurement result of the candidate reference signal includes TCI-state activation recommendation information, and the TCI-state activation recommendation information includes the index of the TCI-state associated with the first candidate reference signal; or when the reporting type information includes the TCI-state update recommendation, the actual measurement result of the candidate reference signal includes the TCI-state update recommendation information, and the TCI-state update recommendation information includes the TCI-state index and the index information of the first candidate reference signal.

In still another possible implementation, the communication unit 1202 is further configured to receive first indication information from the network device when the actual measurement result of the candidate reference signal includes the TCI-state activation recommendation information, where the first indication information indicates whether the network device agrees to activate the TCI-state associated with the first candidate reference signal; or the communication unit 1202 is further configured to receive second indication information from the network device when the actual measurement result of the candidate reference signal includes the TCI-state update recommendation information, where the second indication information indicates whether the network device agrees to update the TCI-state.

In still another possible implementation, the communication unit 1202 is further configured to receive a validity parameter of the preset inference model from the network device; and the processing unit 1201 is further configured to determine, based on the validity parameter of the preset inference model, whether the preset inference model is valid.

In still another possible implementation, the validity parameter of the preset inference model includes one or more of the following: a relative beam gain of the second reference signal to the first reference signal, a beam gain estimation error reference value of the second reference signal, a model invalidation count threshold, or a model invalidation count time window length.

In still another possible implementation, the processing unit 1201 is configured to compare the actual measurement result of the candidate reference signal and the measurement result of the first reference signal with the relative beam gain of the second reference signal to the first reference signal to determine whether the preset inference model is valid.

In still another possible implementation, the processing unit 1201 is configured to: if a difference between a largest value in the actual measurement result of the candidate reference signal and a largest value in the measurement result of the first reference signal is greater than the relative beam gain of the second reference signal to the first reference signal, determine that the preset inference model is valid; or the processing unit 1201 is configured to: if a difference between a largest value in the actual measurement result of the candidate reference signal and a largest value in the measurement result of the first reference signal is less than the relative beam gain of the second reference signal to the first reference signal, determine that the preset inference model is invalid.

In still another possible implementation, the processing unit 1201 is configured to compare the actual measurement result of the candidate reference signal and the estimated measurement result of the second reference signal with the beam gain estimation error reference value of the second reference signal to determine whether the preset inference model is valid.

In still another possible implementation, the processing unit 1201 is configured to: if an absolute value of a difference between the actual measurement result of the candidate reference signal and the estimated measurement result of the second reference signal is less than the beam gain estimation error reference value of the second reference signal, determine that the preset inference model is valid; or the processing unit 1201 is configured to: if an absolute value of a difference between the actual measurement result of the candidate reference signal and the estimated measurement result of the second reference signal is greater than or equal to the beam gain estimation error reference value of the second reference signal, determine that the preset inference model is invalid.

In still another possible implementation, the processing unit 1201 is configured to: when determining that a quantity of times the preset inference model is invalid is less than the model invalidation count threshold, determine that the preset inference model is valid; or the processing unit 1201 is configured to: when determining that a quantity of times the preset inference model is invalid is greater than or equal to the model invalidation count threshold, determine that the preset inference model is invalid.

In still another possible implementation, the processing unit 1201 is further configured to start a counter; the processing unit 1201 is further configured to increase a value of the counter when determining that the preset inference model is invalid; and the processing unit 1201 is further configured to: when determining that the quantity of times the preset inference model is invalid is greater than or equal to the model invalidation count threshold, perform a reset operation on the counter after determining that the preset inference model is invalid.

In still another possible implementation, the validity parameter of the preset inference model includes the model invalidation count time window length; and the processing unit 1201 is further configured to start a timer, and perform a reset operation on the counter when a value of the timer exceeds the time window length. It should be noted that, the processing unit 1201 further performs a reset operation on the timer when performing the reset operation on the counter.

In still another possible implementation, when it is determined that the preset inference model is valid, the actual measurement result of the candidate reference signal further includes a validity identifier of the preset inference model; or when it is determined that the preset inference model is invalid, the actual measurement result of the candidate reference signal further includes an invalidity identifier of the preset inference model.

It should be noted that, for implementation and beneficial effects of the units, refer to corresponding descriptions of the method embodiment shown in FIG. 6, FIG. 8, FIG. 9, FIG. 10, or FIG. 11.

Detailed descriptions of the units are as follows.

The communication unit 1202 is configured to receive a validity parameter of a preset inference model from the network device; and the processing unit 1201 is configured to determine, based on the validity parameter of the preset inference model, a measurement result of a first reference signal and/or an estimated measurement result of a second reference signal, and an actual measurement result of a candidate reference signal, whether the preset inference model is valid.

In a possible implementation, the communication unit 1202 is further configured to receive the preset inference model from the network device; the communication unit 1202 is further configured to receive the first reference signal from the network device, and measure the first reference signal to determine the measurement result of the first reference signal, where the first reference signal includes a reference signal that belongs to a first set; the processing unit 1201 is further configured to determine the estimated measurement result of the second reference signal based on the preset inference model and the measurement result of the first reference signal, where the second reference signal includes a reference signal that belongs to a second set; the processing unit 1201 is further configured to determine a candidate reference signal set based on the estimated measurement result of the second reference signal, where the candidate reference signal set is the second set or a subset of the second set; and the processing unit 1201 is further configured to measure the candidate reference signal in the candidate reference signal set to determine the actual measurement result of the candidate reference signal.

In another possible implementation, the validity parameter of the preset inference model includes one or more of the following: a relative beam gain of the second reference signal to the first reference signal, a beam gain estimation error reference value of the second reference signal, a model invalidation count threshold, or a model invalidation count time length.

In still another possible implementation, the validity parameter of the preset inference model includes the relative beam gain of the second reference signal to the first reference signal; and the processing unit 1201 is configured to compare the actual measurement result of the candidate reference signal and the measurement result of the first reference signal with the relative beam gain of the second reference signal to the first reference signal to determine whether the preset inference model is valid.

In still another possible implementation, the processing unit 1201 is configured to: if a difference between a largest value in the actual measurement result of the candidate reference signal and a largest value in the measurement result of the first reference signal is greater than the relative beam gain of the second reference signal to the first reference signal, determine that the preset inference model is valid; or the processing unit 1201 is configured to: if a difference between a largest value in the actual measurement result of the candidate reference signal and a largest value in the measurement result of the first reference signal is less than the relative beam gain of the second reference signal to the first reference signal, determine that the preset inference model is invalid.

In still another possible implementation, the validity parameter of the preset inference model includes the beam gain estimation error reference value of the second reference signal; and the processing unit 1201 is configured to compare the actual measurement result of the candidate reference signal and the estimated measurement result of the second reference signal with the beam gain estimation error reference value of the second reference signal to determine whether the preset inference model is valid.

In still another possible implementation, the processing unit 1201 is configured to: if an absolute value of a difference between the actual measurement result of the candidate reference signal and the estimated measurement result of the second reference signal is less than the beam gain estimation error reference value of the second reference signal, determine that the preset inference model is valid; or the processing unit 1201 is configured to: if an absolute value of a difference between the actual measurement result of the candidate reference signal and the estimated measurement result of the second reference signal is greater than or equal to the beam gain estimation error reference value of the second reference signal, determine that the preset inference model is invalid.

In still another possible implementation, the validity parameter of the preset inference model includes the model invalidation count threshold; and the processing unit 1201 is configured to: when determining that a quantity of times the preset inference model is invalid is less than the model invalidation count threshold, determine that the preset inference model is valid; or the processing unit 1201 is configured to: when determining that a quantity of times the preset inference model is invalid is greater than or equal to the model invalidation count threshold, determine that the preset inference model is invalid.

In still another possible implementation, the processing unit 1201 is further configured to start a counter; and increase a value of the counter when determining that the preset inference model is invalid; and the processing unit 1201 is further configured to: when determining that the quantity of times the preset inference model is invalid is greater than or equal to the model invalidation count threshold, perform a reset operation on the counter after determining that the preset inference model is invalid.

In still another possible implementation, the validity parameter of the preset inference model includes the model invalidation count time window length; and the processing unit 1201 is further configured to start a timer, and perform a reset operation on the counter when a value of the timer exceeds the time window length. It should be noted that, the processing unit 1201 further performs a reset operation on the timer when performing the reset operation on the counter.

In still another possible implementation, when it is determined that the preset inference model is valid, the actual measurement result of the candidate reference signal further includes a validity identifier of the preset inference model; or when it is determined that the preset inference model is invalid, the actual measurement result of the candidate reference signal further includes an invalidity identifier of the preset inference model.

In still another possible implementation, the communication unit 1202 is further configured to receive port type information in the preset inference model and association relationship information from the network device, where the port type information in the preset inference model includes data type information of each input port and each output port in the preset inference model, and the association relationship information includes a relationship between the input port in the preset inference model and the first reference signal and a relationship between the output port in the preset inference model and the second reference signal; and the processing unit 1201 is configured to determine the estimated measurement result of the second reference signal based on the preset inference model, the measurement result of the first reference signal, the port type information in the preset inference model, and the association relationship information.

In another possible implementation, each port in the preset inference model corresponds to one type of port type information, and port type information corresponding to a first port in the preset inference model is the same as port type information corresponding to a second port in the preset inference model.

In still another possible implementation, each port in the preset inference model corresponds to one type of port type information, and port type information corresponding to a first port in the preset inference model is different from port type information corresponding to a second port in the preset inference model.

In still another possible implementation, the port type information in the preset inference model includes one or more of the following: receive power information of a reference signal, received signal strength indication information of the reference signal, optimal quality probability information of the reference signal, received signal related information of the reference signal, an angle of departure AoD of the reference signal, an angle of arrival AoA of the reference signal, beam index information used for sending or receiving the reference signal, a beam weight used for sending or receiving the reference signal, location coordinate information of a terminal device when the reference signal is sent, posture and orientation information of the terminal device when the reference signal is sent, and identification information of the reference signal.

In still another possible implementation, the processing unit 1201 is configured to input a measurement result of the first reference signal into the preset inference model based on data type information of each input port in the port type information in the preset inference model and a relationship between the input port in the preset inference model and the first reference signal in the association relationship information. The processing unit 1201 is configured to determine, based on the data type information of each output port in the port type information in the preset inference model and the relationship between the output port in the preset inference model and the second reference signal in the association relationship information, an estimated measurement result of the second reference signal output by the preset inference model.

In still another possible implementation, the communication unit 1202 is further configured to receive resource configuration information from the network device; and the communication unit 1202 is further configured to send the actual measurement result of the candidate reference signal to the network device based on the resource configuration information.

In still another possible implementation, the actual measurement result of the candidate reference signal includes one or more of the following: index information of a first candidate reference signal and reference signal received power RSRP of the first candidate reference signal; TCI-state activation recommendation information, where the TCI-state activation recommendation information includes an index of a transmission configuration indicator state TCI-state associated with the first candidate reference signal; or TCI-state update recommendation information, where the TCI-state update recommendation information includes the TCI-state index and the index information of the first candidate reference signal, where the first candidate reference signal includes one or more candidate reference signals in the candidate reference signal set.

In still another possible implementation, the communication unit 1202 is further configured to send the measurement result of the first reference signal to the network device.

In still another possible implementation, the communication unit 1202 is further configured to receive reporting type information from the network device, where the reporting type information includes a TCI-state activation recommendation and/or a TCI-state update recommendation.

In still another possible implementation, when the reporting type information includes the TCI-state activation recommendation, the actual measurement result of the candidate reference signal includes TCI-state activation recommendation information, and the TCI-state activation recommendation information includes the index of the TCI-state associated with the first candidate reference signal; or when the reporting type information includes the TCI-state update recommendation, the actual measurement result of the candidate reference signal includes the TCI-state update recommendation information, and the TCI-state update recommendation information includes the TCI-state index and the index information of the first candidate reference signal.

In still another possible implementation, the communication unit 1202 is further configured to receive first indication information from the network device when the actual measurement result of the candidate reference signal includes the TCI-state activation recommendation information, where the first indication information indicates whether the network device agrees to activate the TCI-state associated with the first candidate reference signal; or the communication unit 1202 is further configured to receive second indication information from the network device when the actual measurement result of the candidate reference signal includes the TCI-state update recommendation information, where the second indication information indicates whether the network device agrees to update the TCI-state.

It should be noted that, for implementation and beneficial effects of the units, refer to corresponding descriptions of the method embodiment shown in FIG. 6, FIG. 8, FIG. 9, FIG. 10, or FIG. 11.

FIG. 13 shows a communication apparatus 1300 according to an embodiment of this application. The communication apparatus 1300 includes at least one processor 1301 and a communication interface 1303. Optionally, the communication apparatus 1300 further includes a memory 1302. The processor 1301, the memory 1302, and the communication interface 1303 are connected to one other through a bus 1304.

The memory 1302 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1302 is configured to store related computer programs and data. The communication interface 1303 is configured to receive and send data.

The processor 1301 may be one or more central processing units (central processing units, CPUs). When the processor 1301 is one CPU, the CPU may be a single-core CPU, or may be a multi-core CPU.

The processor 1301 in the communication apparatus 1300 is configured to read computer program code stored in the memory 1302, to implement a function of the processing unit 1201. The communication interface 1303 is configured to implement a function of the communication unit 1202.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or instructions may be stored in a computer-readable storage medium, or may be transmitted from one computer-readable storage medium to another computer-readable storage medium. For example, the computer programs or instructions may be transmitted from one website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In descriptions of this application, terms such as "first", "second", "S601", or "S602" are merely used for distinguishing and description and for ease of organizing this specification. Different sequences or numbers do not have specific technical meanings, and cannot be understood as indicating or implying relative importance, or indicating or implying an execution sequence of operations. Execution sequences of the processes should be determined based on functions and internal logic of the processes.

The term "and/or" in this application describes only an association relationship for associated objects, and indicates that three relationships may exist. For example, "A and/or B" may indicate the following three cases: Only A exists; both A and B exist; or only B exists. A and B may be singular or plural. In addition, the character "/" in this specification indicates an "or" relationship between the associated objects.

In this application, "transmission" may include the following three cases: data sending, data receiving, or data sending and data receiving. In this application, "data" may include service data and/or signaling data.

In this application, the terms "include" or "have" and any variation thereof are intended to cover non-exclusive inclusion. For example, a process/method that includes a series of steps, or a system/product/device that includes a series of units is not necessarily limited to those expressly listed steps or units, but may include other steps or units not explicitly listed or inherent to these processes/methods/products/devices.

In descriptions of this application, unless otherwise specified, a quantity of nouns indicates "a singular noun or a plural noun", that is, "one or more". "At least one" indicates one or more. "At least one of the following: A, B, and C is included" may indicate that A is included, B is included, C is included, A and B are included, A and C are included, B and C are included, or A, B, and C are included, where A, B, and C may be singular or plural.

## Claims

1. A communication method, comprising:
receiving a preset inference model from a network device;
receiving a first reference signal from the network device, and measuring the first reference signal to determine a measurement result of the first reference signal, wherein the first reference signal comprises a reference signal that belongs to a first set;
determining an estimated measurement result of a second reference signal based on the preset inference model and the measurement result of the first reference signal, wherein the second reference signal comprises a reference signal that belongs to a second set;
determining a candidate reference signal set based on the estimated measurement result of the second reference signal, wherein the candidate reference signal set is the second set or a subset of the second set; and
measuring a candidate reference signal in the candidate reference signal set to determine an actual measurement result of the candidate reference signal.

2. The method according to claim 1, wherein the method further comprises:
receiving port type information in the preset inference model and association relationship information from the network device, wherein the port type information in the preset inference model comprises data type information of each input port and each output port in the preset inference model, and the association relationship information comprises a relationship between the input port in the preset inference model and the first reference signal and a relationship between the output port in the preset inference model and the second reference signal; and
the determining an estimated measurement result of a second reference signal based on the preset inference model and a measurement result of the first reference signal comprises:
determining the estimated measurement result of the second reference signal based on the preset inference model, the measurement result of the first reference signal, the port type information in the preset inference model, and the association relationship information.

3. The method according to claim 2, wherein each port in the preset inference model corresponds to one type of port type information, port type information corresponding to a first port in the preset inference model is the same as or different from port type information corresponding to a second port in the preset inference model, and the port type information in the preset inference model comprises one or more of the following:
receive power information of a reference signal, received signal strength indication information of the reference signal, optimal quality probability information of the reference signal, received signal related information of the reference signal, an angle of departure AoD of the reference signal, an angle of arrival AoA of the reference signal, beam index information used for sending or receiving the reference signal, a beam weight used for sending or receiving the reference signal, location coordinate information of a terminal device when the reference signal is sent, posture and orientation information of the terminal device when the reference signal is sent, and identification information of the reference signal.

4. The method according to claim 2 or 3, wherein the determining the estimated measurement result of the second reference signal based on the preset inference model, the measurement result of the first reference signal, the port type information in the preset inference model, and the association relationship information comprises:
inputting the measurement result of the first reference signal into the preset inference model based on the data type information of each input port in the port type information in the preset inference model and the relationship between the input port in the preset inference model and the first reference signal in the association relationship information; and
determining, based on the data type information of each output port in the port type information in the preset inference model and the relationship between the output port in the preset inference model and the second reference signal in the association relationship information, the estimated measurement result that is of the second reference signal and that is output from the preset inference model.

5. The method according to any one of claims 1 to 4, wherein the method further comprises:
receiving resource configuration information from the network device; and
sending the actual measurement result of the candidate reference signal to the network device based on the resource configuration information, wherein the actual measurement result of the candidate reference signal comprises one or more of the following:
index information of a first candidate reference signal and reference signal received power RSRP of the first candidate reference signal;
TCI-state activation recommendation information, wherein the TCI-state activation recommendation information comprises an index of a transmission configuration indicator state TCI-state associated with the first candidate reference signal; or
TCI-state update recommendation information, wherein the TCI-state update recommendation information comprises the TCI-state index and the index information of the first candidate reference signal, wherein the first candidate reference signal comprises one or more candidate reference signals in the candidate reference signal set.

6. The method according to claim 5, wherein the method further comprises:
receiving reporting type information from the network device, wherein the reporting type information comprises a TCI-state activation recommendation and/or a TCI-state update recommendation.

7. The method according to claim 6, wherein
when the reporting type information comprises the TCI-state activation recommendation, the actual measurement result of the candidate reference signal comprises the TCI-state activation recommendation information, and the TCI-state activation recommendation information comprises the index of the TCI-state associated with the first candidate reference signal; or
when the reporting type information comprises the TCI-state update recommendation, the actual measurement result of the candidate reference signal comprises the TCI-state update recommendation information, and the TCI-state update recommendation information comprises the TCI-state index and the index information of the first candidate reference signal.

8. The method according to claim 7, wherein the method further comprises:
receiving first indication information from the network device when the actual measurement result of the candidate reference signal comprises the TCI-state activation recommendation information, wherein the first indication information indicates whether the network device agrees to activate the TCI-state associated with the first candidate reference signal; or
receiving second indication information from the network device when the actual measurement result of the candidate reference signal comprises the TCI-state update recommendation information, wherein the second indication information indicates whether the network device agrees to update the TCI-state.

9. The method according to any one of claims 1 to 8, wherein the method further comprises:
receiving a validity parameter of the preset inference model from the network device; and
determining, based on the validity parameter of the preset inference model, whether the preset inference model is valid.

10. The method according to claim 9, wherein the validity parameter of the preset inference model comprises one or more of the following: a relative beam gain of the second reference signal to the first reference signal, a beam gain estimation error reference value of the second reference signal, a model invalidation count threshold, or a model invalidation count time window length.

11. The method according to claim 9, wherein the validity parameter of the preset inference model comprises a relative beam gain of the second reference signal to the first reference signal; and
the determining, based on the validity parameter of the preset inference model, whether the preset inference model is valid comprises:
comparing the actual measurement result of the candidate reference signal and the measurement result of the first reference signal with the relative beam gain of the second reference signal to the first reference signal, to determine whether the preset inference model is valid.

12. The method according to claim 11, wherein the comparing the actual measurement result of the candidate reference signal and the measurement result of the first reference signal with the relative beam gain of the second reference signal to the first reference signal, to determine whether the preset inference model is valid comprises:
if a difference between a largest value in the actual measurement result of the candidate reference signal and a largest value in the measurement result of the first reference signal is greater than the relative beam gain of the second reference signal to the first reference signal, determining that the preset inference model is valid; or
if a difference between a largest value in the actual measurement result of the candidate reference signal and a largest value in the measurement result of the first reference signal is less than the relative beam gain of the second reference signal to the first reference signal, determining that the preset inference model is invalid.

13. The method according to claim 9, wherein the validity parameter of the preset inference model comprises a beam gain estimation error reference value of the second reference signal; and
the determining, based on the validity parameter of the preset inference model, whether the preset inference model is valid comprises:
comparing the actual measurement result of the candidate reference signal and the estimated measurement result of the second reference signal with the beam gain estimation error reference value of the second reference signal, to determine whether the preset inference model is valid.

14. The method according to claim 13, wherein the comparing the actual measurement result of the candidate reference signal and the estimated measurement result of the second reference signal with the beam gain estimation error reference value of the second reference signal, to determine whether the preset inference model is valid comprises:
if an absolute value of a difference between the actual measurement result of the candidate reference signal and the estimated measurement result of the second reference signal is less than the beam gain estimation error reference value of the second reference signal, determining that the preset inference model is valid; or
if an absolute value of a difference between the actual measurement result of the candidate reference signal and the estimated measurement result of the second reference signal is greater than or equal to the beam gain estimation error reference value of the second reference signal, determining that the preset inference model is invalid.

15. The method according to claim 9, wherein the validity parameter of the preset inference model comprises a model invalidation count threshold; and
the determining, based on the validity parameter of the preset inference model, whether the preset inference model is valid comprises:
when determining that a quantity of times the preset inference model is invalid is less than the model invalidation count threshold, determining that the preset inference model is valid; or
when determining that a quantity of times the preset inference model is invalid is greater than or equal to the model invalidation count threshold, determining that the preset inference model is invalid.

16. The method according to any one of claims 9 to 15, wherein the method further comprises:
starting a counter, and increasing a value of the counter when determining that the preset inference model is invalid; and
when determining that the quantity of times the preset inference model is invalid is greater than or equal to the model invalidation count threshold, performing a reset operation on the counter after determining that the preset inference model is invalid.

17. The method according to any one of claims 9 to 16, wherein the validity parameter of the preset inference model comprises the model invalidation count time window length, and the method further comprises:
starting a timer, and performing a reset operation on the counter when a value of the timer exceeds the model invalidation count time window length.

18. The method according to any one of claims 9 to 17, wherein
when it is determined that the preset inference model is valid, the actual measurement result of the candidate reference signal further comprises a validity identifier of the preset inference model; or
when it is determined that the preset inference model is invalid, the actual measurement result of the candidate reference signal further comprises an invalidity identifier of the preset inference model.

19. A communication method, comprising:
receiving a validity parameter of a preset inference model from a network device; and
determining, based on the validity parameter of the preset inference model, a measurement result of a first reference signal and/or an estimated measurement result of a second reference signal, and an actual measurement result of a candidate reference signal, whether the preset inference model is valid.

20. The method according to claim 19, wherein the method further comprises:
receiving the preset inference model from the network device;
receiving the first reference signal from the network device, and measuring the first reference signal to determine the measurement result of the first reference signal, wherein the first reference signal comprises a reference signal that belongs to a first set;
determining the estimated measurement result of the second reference signal based on the preset inference model and the measurement result of the first reference signal, wherein the second reference signal comprises a reference signal that belongs to a second set;
determining a candidate reference signal set based on the estimated measurement result of the second reference signal, wherein the candidate reference signal set is the second set or a subset of the second set; and
measuring the candidate reference signal in the candidate reference signal set to determine the actual measurement result of the candidate reference signal.

21. The method according to claim 19 or 20, wherein the validity parameter of the preset inference model comprises one or more of the following:
a relative beam gain of the second reference signal to the first reference signal, a beam gain estimation error reference value of the second reference signal, a model invalidation count threshold, or a model invalidation count time length.

22. The method according to any one of claims 19 to 21, wherein the validity parameter of the preset inference model comprises the relative beam gain of the second reference signal to the first reference signal; and
the determining, based on the validity parameter of the preset inference model, a measurement result of a first reference signal, and an actual measurement result of a candidate reference signal, whether the preset inference model is valid comprises:
comparing the actual measurement result of the candidate reference signal and the measurement result of the first reference signal with the relative beam gain of the second reference signal to the first reference signal, to determine whether the preset inference model is valid.

23. The method according to claim 22, wherein the comparing the actual measurement result of the candidate reference signal and the measurement result of the first reference signal with the relative beam gain of the second reference signal to the first reference signal, to determine whether the preset inference model is valid comprises:
if a difference between a largest value in the actual measurement result of the candidate reference signal and a largest value in the measurement result of the first reference signal is greater than the relative beam gain of the second reference signal to the first reference signal, determining that the preset inference model is valid; or
if a difference between a largest value in the actual measurement result of the candidate reference signal and a largest value in the measurement result of the first reference signal is less than the relative beam gain of the second reference signal to the first reference signal, determining that the preset inference model is invalid.

24. The method according to any one of claims 19 to 21, wherein the validity parameter of the preset inference model comprises the beam gain estimation error reference value of the second reference signal; and
the determining, based on the validity parameter of the preset inference model, an estimated measurement result of a second reference signal, and an actual measurement result of a candidate reference signal, whether the preset inference model is valid comprises:
comparing the actual measurement result of the candidate reference signal and the estimated measurement result of the second reference signal with the beam gain estimation error reference value of the second reference signal, to determine whether the preset inference model is valid.

25. The method according to claim 24, wherein the comparing the actual measurement result of the candidate reference signal and the estimated measurement result of the second reference signal with the beam gain estimation error reference value of the second reference signal, to determine whether the preset inference model is valid comprises:
if an absolute value of a difference between the actual measurement result of the candidate reference signal and the estimated measurement result of the second reference signal is less than the beam gain estimation error reference value of the second reference signal, determining that the preset inference model is valid; or
if an absolute value of a difference between the actual measurement result of the candidate reference signal and the estimated measurement result of the second reference signal is greater than or equal to the beam gain estimation error reference value of the second reference signal, determining that the preset inference model is invalid.

26. The method according to any one of claims 19 to 21, wherein the validity parameter of the preset inference model comprises the model invalidation count threshold; and
the determining, based on the validity parameter of the preset inference model, a measurement result of a first reference signal and/or an estimated measurement result of a second reference signal, and an actual measurement result of a candidate reference signal, whether the preset inference model is valid comprises:
when determining that a quantity of times the preset inference model is invalid is less than the model invalidation count threshold, determining that the preset inference model is valid; or
when determining that a quantity of times the preset inference model is invalid is greater than or equal to the model invalidation count threshold, determining that the preset inference model is invalid.

27. The method according to any one of claims 22 to 26, wherein
when it is determined that the preset inference model is valid, the actual measurement result of the candidate reference signal further comprises a validity identifier of the preset inference model; or
when it is determined that the preset inference model is invalid, the actual measurement result of the candidate reference signal further comprises an invalidity identifier of the preset inference model.

28. The method according to any one of claims 19 to 27, wherein the method further comprises:
starting a counter, and increasing a value of the counter when determining that the preset inference model is invalid; and
when determining that the quantity of times the preset inference model is invalid is greater than or equal to the model invalidation count threshold, performing a reset operation on the counter after determining that the preset inference model is invalid.

29. The method according to any one of claims 19 to 28, wherein the validity parameter of the preset inference model comprises the model invalidation count time window length, and the method further comprises:
starting a timer, and performing a reset operation on the counter when a value of the timer exceeds the time window length.

30. The method according to claim 20, wherein the method further comprises:
receiving port type information in the preset inference model and association relationship information from the network device, wherein the port type information in the preset inference model comprises data type information of each input port and each output port in the preset inference model, and the association relationship information comprises a relationship between the input port in the preset inference model and the first reference signal and a relationship between the output port in the preset inference model and the second reference signal; and
the determining the estimated measurement result of the second reference signal based on the preset inference model and the measurement result of the first reference signal comprises:
determining the estimated measurement result of the second reference signal based on the preset inference model, the measurement result of the first reference signal, the port type information in the preset inference model, and the association relationship information.

31. The method according to claim 30, wherein each port in the preset inference model corresponds to one type of port type information, and port type information corresponding to a first port in the preset inference model is the same as port type information corresponding to a second port in the preset inference model.

32. The method according to claim 30, wherein each port in the preset inference model corresponds to one type of port type information, and port type information corresponding to a first port in the preset inference model is different from port type information corresponding to a second port in the preset inference model.

33. The method according to any one of claims 30 to 32, wherein the port type information in the preset inference model comprises one or more of the following:
receive power information of a reference signal, received signal strength indication information of the reference signal, optimal quality probability information of the reference signal, received signal related information of the reference signal, an angle of departure AoD of the reference signal, an angle of arrival AoA of the reference signal, beam index information used for sending or receiving the reference signal, a beam weight used for sending or receiving the reference signal, location coordinate information of a terminal device when the reference signal is sent, posture and orientation information of the terminal device when the reference signal is sent, and identification information of the reference signal.

34. The method according to any one of claims 30 to 33, wherein the determining the estimated measurement result of the second reference signal based on the preset inference model, the measurement result of the first reference signal, the port type information in the preset inference model, and the association relationship information comprises:
inputting the measurement result of the first reference signal into the preset inference model based on the data type information of each input port in the port type information in the preset inference model and the relationship between the input port in the preset inference model and the first reference signal in the association relationship information; and
determining, based on the data type information of each output port in the port type information in the preset inference model and the relationship between the output port in the preset inference model and the second reference signal in the association relationship information, the estimated measurement result that is of the second reference signal and that is output from the preset inference model.

35. The method according to any one of claims 19 to 34, wherein the method further comprises:
receiving resource configuration information from the network device; and
sending the actual measurement result of the candidate reference signal to the network device based on the resource configuration information.

36. The method according to claim 35, wherein the actual measurement result of the candidate reference signal comprises one or more of the following:
index information of a first candidate reference signal and reference signal received power RSRP of the first candidate reference signal; TCI-state activation recommendation information, wherein the TCI-state activation recommendation information comprises an index of a transmission configuration indicator state TCI-state associated with the first candidate reference signal; or TCI-state update recommendation information, wherein the TCI-state update recommendation information comprises the TCI-state index and the index information of the first candidate reference signal, wherein the first candidate reference signal comprises one or more candidate reference signals in the candidate reference signal set.

37. The method according to any one of claims 19 to 36, wherein the method further comprises:
sending the measurement result of the first reference signal to the network device.

38. The method according to any one of claims 19 to 37, wherein the method further comprises:
receiving reporting type information from the network device, wherein the reporting type information comprises a TCI-state activation recommendation and/or a TCI-state update recommendation.

39. The method according to claim 38, wherein when the reporting type information comprises the TCI-state activation recommendation, the actual measurement result of the candidate reference signal comprises the TCI-state activation recommendation information, and the TCI-state activation recommendation information comprises the index of the TCI-state associated with the first candidate reference signal; or
when the reporting type information comprises the TCI-state update recommendation, the actual measurement result of the candidate reference signal comprises the TCI-state update recommendation information, and the TCI-state update recommendation information comprises the TCI-state index and the index information of the first candidate reference signal, wherein the index information of the first candidate reference signal comprises a reference signal resource set index and a reference signal resource index in the set, or a reference signal resource index.

40. The method according to claim 39, wherein the method further comprises:
receiving first indication information from the network device when the actual measurement result of the candidate reference signal comprises the TCI-state activation recommendation information, wherein the first indication information indicates whether the network device agrees to activate the TCI-state associated with the first candidate reference signal; or
receiving second indication information from the network device when the actual measurement result of the candidate reference signal comprises the TCI-state update recommendation information, wherein the second indication information indicates whether the network device agrees to update the TCI-state.

41. A communication apparatus, comprising a communication unit and a processing unit, wherein
the communication unit is configured to receive a preset inference model from a network device;
the communication unit is configured to: receive a first reference signal from the network device, and measure the first reference signal to determine a measurement result of the first reference signal, wherein the first reference signal comprises a reference signal that belongs to a first set;
the processing unit is configured to determine an estimated measurement result of a second reference signal based on the preset inference model and the measurement result of the first reference signal, wherein the second reference signal comprises a reference signal that belongs to a second set;
the processing unit is configured to determine a candidate reference signal set based on the estimated measurement result of the second reference signal, wherein the candidate reference signal set is the second set or a subset of the second set; and
the processing unit is configured to measure a candidate reference signal in the candidate reference signal set to determine an actual measurement result of the candidate reference signal.

42. The apparatus according to claim 41, wherein
the communication unit is further configured to receive port type information in the preset inference model and association relationship information from the network device, wherein the port type information in the preset inference model comprises data type information of each input port and each output port in the preset inference model, and the association relationship information comprises a relationship between the input port in the preset inference model and the first reference signal and a relationship between the output port in the preset inference model and the second reference signal; and
the processing unit is further configured to determine the estimated measurement result of the second reference signal based on the preset inference model, the measurement result of the first reference signal, the port type information in the preset inference model, and the association relationship information.

43. The apparatus according to claim 42, wherein each port in the preset inference model corresponds to one type of port type information, port type information corresponding to a first port in the preset inference model is the same as or different from port type information corresponding to a second port in the preset inference model, and the port type information in the preset inference model comprises one or more of the following:
receive power information of a reference signal, received signal strength indication information of the reference signal, optimal quality probability information of the reference signal, received signal related information of the reference signal, an angle of departure AoD of the reference signal, an angle of arrival AoA of the reference signal, beam index information used for sending or receiving the reference signal, a beam weight used for sending or receiving the reference signal, location coordinate information of a terminal device when the reference signal is sent, posture and orientation information of the terminal device when the reference signal is sent, and identification information of the reference signal.

44. The apparatus according to claim 42 or 43, wherein
the processing unit is configured to input the measurement result of the first reference signal into the preset inference model based on the data type information of each input port in the port type information in the preset inference model and the relationship between the input port in the preset inference model and the first reference signal in the association relationship information; and
the processing unit is configured to determine, based on the data type information of each output port in the port type information in the preset inference model and the relationship between the output port in the preset inference model and the second reference signal in the association relationship information, the estimated measurement result that is of the second reference signal and that is output from the preset inference model.

45. The apparatus according to any one of claims 41 to 44, wherein
the communication unit is further configured to receive resource configuration information from the network device; and
the communication unit is further configured to send the actual measurement result of the candidate reference signal to the network device based on the resource configuration information, wherein the actual measurement result of the candidate reference signal comprises one or more of the following:
index information of a first candidate reference signal and reference signal received power RSRP of the first candidate reference signal;
TCI-state activation recommendation information, wherein the TCI-state activation recommendation information comprises an index of a transmission configuration indicator state TCI-state associated with the first candidate reference signal; or
TCI-state update recommendation information, wherein the TCI-state update recommendation information comprises the TCI-state index and the index information of the first candidate reference signal, wherein the first candidate reference signal comprises one or more candidate reference signals in the candidate reference signal set.

46. The apparatus according to claim 45, wherein
the communication unit is configured to receive reporting type information from the network device, wherein the reporting type information comprises a TCI-state activation recommendation and/or a TCI-state update recommendation.

47. The apparatus according to claim 46, wherein
when the reporting type information comprises the TCI-state activation recommendation, the actual measurement result of the candidate reference signal comprises the TCI-state activation recommendation information, and the TCI-state activation recommendation information comprises the index of the TCI-state associated with the first candidate reference signal; or
when the reporting type information comprises the TCI-state update recommendation, the actual measurement result of the candidate reference signal comprises the TCI-state update recommendation information, and the TCI-state update recommendation information comprises the TCI-state index and the index information of the first candidate reference signal.

48. The apparatus according to claim 47, wherein
the communication unit is further configured to receive first indication information from the network device when the actual measurement result of the candidate reference signal comprises the TCI-state activation recommendation information, wherein the first indication information indicates whether the network device agrees to activate the TCI-state associated with the first candidate reference signal; or
the communication unit is further configured to receive second indication information from the network device when the actual measurement result of the candidate reference signal comprises the TCI-state update recommendation information, wherein the second indication information indicates whether the network device agrees to update the TCI-state.

49. The apparatus according to any one of claims 41 to 48, wherein
the communication unit is further configured to receive a validity parameter of the preset inference model from the network device; and
the processing unit is further configured to determine, based on the validity parameter of the preset inference model, whether the preset inference model is valid.

50. The apparatus according to claim 49, wherein the validity parameter of the preset inference model comprises one or more of the following: a relative beam gain of the second reference signal to the first reference signal, a beam gain estimation error reference value of the second reference signal, a model invalidation count threshold, or a model invalidation count time window length.

51. The apparatus according to claim 50, wherein
the processing unit is configured to compare the actual measurement result of the candidate reference signal and the measurement result of the first reference signal with the relative beam gain of the second reference signal to the first reference signal, to determine whether the preset inference model is valid.

52. The apparatus according to claim 51, wherein
the processing unit is configured to: if a difference between a largest value in the actual measurement result of the candidate reference signal and a largest value in the measurement result of the first reference signal is greater than the relative beam gain of the second reference signal to the first reference signal, determine that the preset inference model is valid; or
the processing unit is configured to: if a difference between a largest value in the actual measurement result of the candidate reference signal and a largest value in the measurement result of the first reference signal is less than the relative beam gain of the second reference signal to the first reference signal, determine that the preset inference model is invalid.

53. The apparatus according to claim 50, wherein
the processing unit is configured to compare the actual measurement result of the candidate reference signal and the estimated measurement result of the second reference signal with the beam gain estimation error reference value of the second reference signal, to determine whether the preset inference model is valid.

54. The apparatus according to claim 53, wherein
the processing unit is configured to: if an absolute value of a difference between the actual measurement result of the candidate reference signal and the estimated measurement result of the second reference signal is less than the beam gain estimation error reference value of the second reference signal, determine that the preset inference model is valid; or
the processing unit is configured to: if an absolute value of a difference between the actual measurement result of the candidate reference signal and the estimated measurement result of the second reference signal is greater than or equal to the beam gain estimation error reference value of the second reference signal, determine that the preset inference model is invalid.

55. The apparatus according to claim 50, wherein
the processing unit is configured to: when determining that a quantity of times the preset inference model is invalid is less than the model invalidation count threshold, determine that the preset inference model is valid; or
the processing unit is configured to: when determining that a quantity of times the preset inference model is invalid is greater than or equal to the model invalidation count threshold, determine that the preset inference model is invalid.

56. The apparatus according to any one of claims 49 to 55, wherein
the processing unit is further configured to start a counter;
the processing unit is further configured to increase a value of the counter when determining that the preset inference model is invalid; and
the processing unit is further configured to: when determining that the quantity of times the preset inference model is invalid is greater than or equal to the model invalidation count threshold, perform a reset operation on the counter after determining that the preset inference model is invalid.

57. The apparatus according to any one of claims 49 to 56, wherein the validity parameter of the preset inference model comprises the model invalidation count time window length; and
the processing unit is further configured to start a timer, and perform a reset operation on the counter when a value of the timer exceeds the time window length.

58. The apparatus according to any one of claims 49 to 57, wherein
when it is determined that the preset inference model is valid, the actual measurement result of the candidate reference signal further comprises a validity identifier of the preset inference model; or
when it is determined that the preset inference model is invalid, the actual measurement result of the candidate reference signal further comprises an invalidity identifier of the preset inference model.

59. A communication apparatus, comprising a communication unit and a processing unit, wherein
the communication unit is configured to receive a validity parameter of a preset inference model from a network device; and
the processing unit is configured to determine, based on the validity parameter of the preset inference model, a measurement result of a first reference signal and/or an estimated measurement result of a second reference signal, and an actual measurement result of a candidate reference signal, whether the preset inference model is valid.

60. The apparatus according to claim 59, wherein
the communication unit is further configured to receive the preset inference model from the network device;
the communication unit is further configured to: receive the first reference signal from the network device, and measure the first reference signal to determine the measurement result of the first reference signal, wherein the first reference signal comprises a reference signal that belongs to a first set;
the processing unit is further configured to determine the estimated measurement result of the second reference signal based on the preset inference model and the measurement result of the first reference signal, wherein the second reference signal comprises a reference signal that belongs to a second set;
the processing unit is further configured to determine a candidate reference signal set based on the estimated measurement result of the second reference signal, wherein the candidate reference signal set is the second set or a subset of the second set; and
the processing unit is further configured to measure the candidate reference signal in the candidate reference signal set to determine the actual measurement result of the candidate reference signal.

61. The apparatus according to claim 59 or 60, wherein the validity parameter of the preset inference model comprises one or more of the following:
a relative beam gain of the second reference signal to the first reference signal, a beam gain estimation error reference value of the second reference signal, a model invalidation count threshold, or a model invalidation count time window length.

62. The apparatus according to any one of claims 59 to 61, wherein the validity parameter of the preset inference model comprises the relative beam gain of the second reference signal to the first reference signal; and
the processing unit is configured to compare the actual measurement result of the candidate reference signal and the measurement result of the first reference signal with the relative beam gain of the second reference signal to the first reference signal, to determine whether the preset inference model is valid.

63. The apparatus according to claim 62, wherein
the processing unit is configured to: if a difference between a largest value in the actual measurement result of the candidate reference signal and a largest value in the measurement result of the first reference signal is greater than the relative beam gain of the second reference signal to the first reference signal, determine that the preset inference model is valid; or
the processing unit is configured to: if a difference between a largest value in the actual measurement result of the candidate reference signal and a largest value in the measurement result of the first reference signal is less than the relative beam gain of the second reference signal to the first reference signal, determine that the preset inference model is invalid.

64. The apparatus according to any one of claims 59 to 61, wherein the validity parameter of the preset inference model comprises the beam gain estimation error reference value of the second reference signal; and
the processing unit is configured to compare the actual measurement result of the candidate reference signal and the estimated measurement result of the second reference signal with the beam gain estimation error reference value of the second reference signal, to determine whether the preset inference model is valid.

65. The apparatus according to claim 64, wherein
the processing unit is configured to: if an absolute value of a difference between the actual measurement result of the candidate reference signal and the estimated measurement result of the second reference signal is less than the beam gain estimation error reference value of the second reference signal, determine that the preset inference model is valid; or
the processing unit is configured to: if an absolute value of a difference between the actual measurement result of the candidate reference signal and the estimated measurement result of the second reference signal is greater than or equal to the beam gain estimation error reference value of the second reference signal, determine that the preset inference model is invalid.

66. The apparatus according to any one of claims 59 to 61, wherein the validity parameter of the preset inference model comprises the model invalidation count threshold; and
the processing unit is configured to: when determining that a quantity of times the preset inference model is invalid is less than the model invalidation count threshold, determine that the preset inference model is valid; or
the processing unit is configured to: when determining that a quantity of times the preset inference model is invalid is greater than or equal to the model invalidation count threshold, determine that the preset inference model is invalid.

67. The apparatus according to any one of claims 62 to 66, wherein
when it is determined that the preset inference model is valid, the actual measurement result of the candidate reference signal further comprises a validity identifier of the preset inference model; or
when it is determined that the preset inference model is invalid, the actual measurement result of the candidate reference signal further comprises an invalidity identifier of the preset inference model.

68. The apparatus according to any one of claims 59 to 67, wherein
the processing unit is further configured to: start a counter, and increase a value of the counter when determining that the preset inference model is invalid; and
the processing unit is further configured to: when determining that the quantity of times the preset inference model is invalid is greater than or equal to the model invalidation count threshold, perform a reset operation on the counter after determining that the preset inference model is invalid.

69. The apparatus according to any one of claims 59 to 68, wherein the validity parameter of the preset inference model comprises the model invalidation count time window length; and
the processing unit is further configured to: start a timer, and perform a reset operation on the counter when a value of the timer exceeds the time window length.

70. The apparatus according to claim 60, wherein
the communication unit is further configured to receive port type information in the preset inference model and association relationship information from the network device, wherein the port type information in the preset inference model comprises data type information of each input port and each output port in the preset inference model, and the association relationship information comprises a relationship between the input port in the preset inference model and the first reference signal and a relationship between the output port in the preset inference model and the second reference signal; and
the processing unit is configured to determine the estimated measurement result of the second reference signal based on the preset inference model, the measurement result of the first reference signal, the port type information in the preset inference model, and the association relationship information.

71. The apparatus according to claim 70, wherein
each port in the preset inference model corresponds to one type of port type information, and port type information corresponding to a first port in the preset inference model is the same as port type information corresponding to a second port in the preset inference model.

72. The apparatus according to claim 70, wherein each port in the preset inference model corresponds to one type of port type information, and port type information corresponding to a first port in the preset inference model is different from port type information corresponding to a second port in the preset inference model.

73. The apparatus according to any one of claims 70 to 72, wherein the port type information in the preset inference model comprises one or more of the following:
receive power information of a reference signal, received signal strength indication information of the reference signal, optimal quality probability information of reference signal, received signal related information of the reference signal, an angle of departure AoD of the reference signal, an angle of arrival AoA of the reference signal, beam index information used for sending or receiving the reference signal, a beam weight used for sending or receiving the reference signal, location coordinate information of a terminal device when the reference signal is sent, posture and orientation information of the terminal device when the reference signal is sent, and identification information of the reference signal.

74. The apparatus according to any one of claims 70 to 73, wherein
the processing unit is configured to input the measurement result of the first reference signal into the preset inference model based on the data type information of each input port in the port type information in the preset inference model and the relationship between the input port in the preset inference model and the first reference signal in the association relationship information; and
the processing unit is configured to determine, based on the data type information of each output port in the port type information in the preset inference model and the relationship between the output port in the preset inference model and the second reference signal in the association relationship information, the estimated measurement result that is of the second reference signal and that is output from the preset inference model.

75. The apparatus according to any one of claims 59 to 74, wherein
the communication unit is further configured to receive resource configuration information from the network device; and
the communication unit is further configured to send the actual measurement result of the candidate reference signal to the network device based on the resource configuration information.

76. The apparatus according to claim 75, wherein the actual measurement result of the candidate reference signal comprises one or more of the following:
index information of a first candidate reference signal and reference signal received power RSRP of the first candidate reference signal; TCI-state activation recommendation information, wherein the TCI-state activation recommendation information comprises an index of a transmission configuration indicator state TCI-state associated with the first candidate reference signal; or TCI-state update recommendation information, wherein the TCI-state update recommendation information comprises the TCI-state index and the index information of the first candidate reference signal, wherein the first candidate reference signal comprises one or more candidate reference signals in the candidate reference signal set.

77. The apparatus according to any one of claims 59 to 76, wherein
the communication unit is further configured to send the measurement result of the first reference signal to the network device.

78. The apparatus according to any one of claims 59 to 77, wherein
the communication unit is further configured to receive reporting type information from the network device, wherein the reporting type information comprises a TCI-state activation recommendation and/or a TCI-state update recommendation.

79. The apparatus according to claim 78, wherein
when the reporting type information comprises the TCI-state activation recommendation, the actual measurement result of the candidate reference signal comprises the TCI-state activation recommendation information, and the TCI-state activation recommendation information comprises the index of the TCI-state associated with the first candidate reference signal; or
when the reporting type information comprises the TCI-state update recommendation, the actual measurement result of the candidate reference signal comprises the TCI-state update recommendation information, and the TCI-state update recommendation information comprises the TCI-state index and the index information of the first candidate reference signal.

80. The apparatus according to claim 79, wherein
the communication unit is further configured to receive first indication information from the network device when the actual measurement result of the candidate reference signal comprises the TCI-state activation recommendation information, wherein the first indication information indicates whether the network device agrees to activate the TCI-state associated with the first candidate reference signal; or
the communication unit is further configured to receive second indication information from the network device when the actual measurement result of the candidate reference signal comprises the TCI-state update recommendation information, wherein the second indication information indicates whether the network device agrees to update the TCI-state.

81. A communication apparatus, wherein the communication apparatus comprises a module configured to perform the method according to any one of claims 1 to 18 or the method according to any one of claims 19 to 40.

82. A communication apparatus, wherein the communication apparatus comprises at least one processor and an interface circuit, and the at least one processor invokes a computer program or instructions stored in a memory to perform the method according to any one of claims 1 to 18 or the method according to any one of claims 19 to 40.

83. The apparatus according to claim 82, wherein the apparatus is a chip system.

84. A computer-readable storage medium, wherein the computer-readable storage medium stores instructions, and when the instructions are run on a processor, the method according to any one of claims 1 to 18 or the method according to any one of claims 19 to 40 is implemented.
